(19) Europäisches Patentamt
European Patent Office
Office européen des brevets

(11) Veröffentlichungsnummer: **0 059 393 B1**

(12) # EUROPÄISCHE PATENTSCHRIFT

(45) Veröffentlichungstag der Patentschrift: **09.09.92**

(51) Int. Cl.$^5$: **B01D 61/02**, B01D 61/36, C08J 5/18

(21) Anmeldenummer: **82101280.4**

(22) Anmeldetag: **19.02.82**

(54) **Hyperfiltrationsmembranen mit Trennschichten aus monomolekularen Filmen von Tensiden.**

(30) Priorität: **27.02.81 DE 3107527**

(43) Veröffentlichungstag der Anmeldung:
**08.09.82 Patentblatt 82/36**

(45) Bekanntmachung des Hinweises auf die Patenterteilung:
**09.09.92 Patentblatt 92/37**

(84) Benannte Vertragsstaaten:
**BE DE FR GB NL SE**

(56) Entgegenhaltungen:
**US-A- 3 129 146**
**US-A- 3 892 665**

**ANGEWANDTE CHEMIE INT. ED. ENGL., Band 20, Nr. 1, Januari 1981, Seiten 90-91, Weinheim, DE; A. AKIMOTO et al.: "Polymer model membranes"**

**MACROMOLECULES, Band 13, 1980, Seiten 1478-1483, American Chemical Society, Easton, US; D. DAY et al.: "Morphology of crystalline diacetylene monolayers polymerized at the gas-water interface"**

(73) Patentinhaber: **Heckmann, Klaus, Prof. Dr.**
**Zum Aichahof 20**
**W-8400 Regensburg(DE)**

(72) Erfinder: **Heckmann, Klaus, Prof.Dr.**
**Zum Aichahof 20**
**W-8400 Regensburg(DE)**
Erfinder: **Pfannenmüller, Beate, Dr.**
**Sonnhalde 95**
**W-7800 Freiburg(DE)**
Erfinder: **Manecke, Georg, Prof.Dr.**
**Hittdorfstrasse 29**
**W-1000 Berlin 33(DE)**
Erfinder: **Ring, Klaus, Prof.Dr.**
**Grosser Hasenpfad 111**
**W-6000 Frankfurt 70(DE)**
Erfinder: **Ringsdorf, Helmut, Prof.Dr.**
**Kehlstrasse 41**
**W-6500 Mainz 1(DE)**

(74) Vertreter: **Kraus, Walter, Dr. et al**
**Patentanwälte Kraus, Weisert & Partner**
**Thomas-Wimmer-Ring 15**
**W-8000 München 22(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services

**THIN SOLID FILMS, Band 68, 1980, Seiten 91-98, Elsevier Sequoia S.A., Lausanne, CH; A. BARRAUD et al.: "Polymerized monomolecular layers: A new class of ultrathin resins for microlithography"**

## Beschreibung

Die Erfindung betrifft Hyperfiltrationsmembranen (HFM) und Verfahren zu ihrer Herstellung.

Membranen sind dünne, flächig ausgebreitete Folien und Filme, die sich durch eine gewisse Festigkeit und Elastizität auszeichnen. Sie können aus Kunststoffen oder Naturprodukten bestehen und besitzen wegen ihrer Filterwirkung in der Stofftrennungstechnologie große Bedeutung. Für technische Trennverfahren, wie für die Meerwasserentsalzung durch umgekehrte Osmose, für die Dialyse, Ultrafiltration, Hyperfiltration usw., werden beispielsweise Membranen von Hochpolymeren verwendet. Die Hyperfiltration wird speziell eingesetzt zur Abtrennung niedermolekularer Substanzen aus Lösungen. Man verwendet hierzu besonders feinporige Membranen und hohe Drucke.

Am meisten verbreitet sind HFM aus Celluloseacetat. Daneben gewinnen in zunehmendem Maße Membranen aus Polyamiden, fluorhaltigen Polymeren sowie Polyharnstoffen und sulfonierten Polyaryläthern an Interesse. Diese Membranen sind anisotrop, da sie aus mehreren aufeinanderliegenden Schichten mit verschiedenen physikalisch-chemischen Eigenschaften bestehen. Beispielsweise bestehen sie aus einer dicken porösen Stützschicht und einer vergleichsweise dünnen und dichten Trennschicht. In allen diesen Schichten sind die Polymermoleküle nach Art eines Filzes angeordnet. Kettenabstände, Kettenabstandsverteilung, Festladungskonzentration, Polarität und Quellvermögen der Polymerketten in diesen Filzstrukturen bestimmen die wesentlichen Eigenschaften der Membranen. So liegen zum Beispiel in speziellen Reversosmose-Membranen die Polymerketten der Trennschicht im Mittel so dicht, daß trotz eines guten Lösungsvermögens für einzelne Wassermoleküle die Ausbildung von Wasser-Clustern weitgehend unterbleibt. Vermutlich aus demselben Grund vermag die Trennschicht keine hydratisierten Ionen aufzunehmen. Hierauf beruht ihr gutes Rückhaltevermögen für gelöste Salze.

Membrantrennverfahren haben einen hohen thermodynamischen Nutzeffekt gegenüber Trennverfahren, die an Phasenübergänge gebunden sind (zum Beispiel Verdampfung, Destillation). Sie verursachen darüber hinaus auch keine Abwärmeprobleme. Ihrem großtechnischen Einsatz stehen aber noch mehrere ungelöste Probleme im Wege:

Der Durchsatz der meisten der bisher entwickelten HFM ist zu gering. Dies ist u.a. durch die zu große Dicke der Trennschichten bedingt. Anzustreben sind konstante Trennschichtdicken von weniger als 5 nm (50 Å). Das ist eine Dickenreduktion um den Faktor 5 bis 10 gegenüber den heutzutage gebräuchlichen Trennschichtdicken. Zwar wird immer wieder über Trennschichtdikken von ca. 5 nm (50 Å) berichtet; es handelt sich hierbei jedoch meist um die Bereiche minimaler Dicke von Trennschichten, deren Dicke im übrigen stark schwankt. Diese Schwankungen sind darauf zurückzuführen, daß die Trennschichten durchweg aus Polymeren mit vorwiegend amorpher Filzstruktur bestehen und diese die Unebenheiten der darunterliegenden Oberfläche der Stützschichten ausfüllen. Ein weiterer Grund für den zu niedrigen Durchsatz von HFM ist darin zu suchen, daß deren poröse Strukturen sich bei wachsenden Druckdifferenzen zunehmend verdichten (compaction).

Die Durchlässigkeit und damit der Durchsatz der amorphen Trennschichten wird zusätzlich dadurch verschlechtert, daß alle Diffusionskoeffizienten durch Umwegfaktoren unnötig verkleinert sind.

Das Trennvermögen der bisher entwickelten HFM ist, von Spezialfällen abgesehen, mangelhaft. Hierfür ist wiederum die Filzstruktur der Trennschichten verantwortlich. Die großen - örtlichen Schwankungen der Abstände zwischen den Polymerketten einer vorwiegend amorphen Schicht lassen eine hohe Spezifität nicht zu. Die für die Aufbringung der Trennschichten angewandten Verfahren gestatten nicht einmal eine genaue Einstellung mittlerer Abstände zwischen den Polymerketten. Anzustreben sind Trennschichten mit möglichst konstanten und genau einstellbaren Abständen zwischen ihren Bausteinen.

Die Standzeiten der bisher entwickelten Membranen sind zu kurz; sie werden in erster Linie durch das sogenannte "fouling" beeinträchtig. Hierunter versteht man die Adsorption von - meist negativ geladenen - kolloidalen Verunreinigungen und Mikroorganismen an den Oberflächen der Trennschichten. Auch dieser Nachteil beruht teilweise auf der amorphen Struktur der Trennschichten. Das "fouling" wird mit gutem Erfolg durch das Aufbringen von negativen Festladungen auf die äußere Oberfläche der Trennschichten bekämpft. Diese Festladungen bewirken eine elektrostatische Abstoßung der genannten Verunreinigungen. Der Abstoßungseffekt steigt mit steigender Festladungsdichte. Die mit Hilfe von vernetzten oder unvernetzten amorphen linearen Polyelektrolyten erreichbaren Ladungsdichten liegen aber unter den theoretisch erreichbaren maximalen Ladungsdichten. Anzustreben sind negative Ladungsdichten, die praktisch einer dichtesten Packung der Festladungen entsprechen.

In einer Reihe von Spezialfällen ist es gelungen, HFM herzustellen, die entweder einen guten Durchsatz oder ein gutes Trennvermögen oder gute Standzeiten aufwiesen. Es ist jedoch nicht gelungen, alle drei geforderten Eigenschaften in einer Membran zu vereinigen. Der Grund hierfür ist, wie bereits ausgeführt, primär in der amorphen Struktur der Trennschichten zu suchen.

In der Literatur, insbesondere in den folgenden Patentschriften neueren Datums, werden zahlreiche HFM und deren Trennschichten beschrieben. Alle diese bis heute hergestellten Trennschichten besitzen jedoch eine amorphe Filzstruktur.

Die ersten reversosmotisch wirksamen HFM waren aus Celluloseacetat und wurden von Loeb-Sourirajan entwickelt. Sie sind in den US-A- 3 133 132, 3 133 137 und 3 344 214 beschrieben. Die Membranen bestehen aus zwei Schichten, nämlich einer aktiven Schicht (Trennschicht) und dem Substrat (Stützschicht). Ihre Nachteile sind die Hydrolyseanfälligkeit der Esterfunktionen, das Phänomen der Verdichtung (compaction) bei hohen Drucken sowie die eingangs genannte zu große Trennschichtdicke, die für den geringen Durchsatz der Membran wesentlich verantwortlich ist.

Ein anderer Typ von reversosmotisch wirksamen, zweischichtigen Membranen sind die "dynamischen" Membranen, bei denen die Trennschichten erst in situ während des Betriebs durch Verschließen der Öffnungen von Ultrafiltrationsmembranen hergestellt werden (US-A- 3 462 362). Diese Membranen können naturgemäß nicht einsatzbereit hergestellt werden. Die Eigenschaften der Trennschichten variieren mit der Natur des verschließenden Materials, und der Prozeß des Verschließens muß relativ häufig wiederholt werden. Die Trennschichten sind auch in diesem Fall amorph, was zu den bekannten Nachteilen führt.

Man hat auch vorgeschlagen, die Anzahl der Schichten in reversosmotisch wirksamen Membranen zu erhöhen (US-A- 3 556 305). Auf diese Weise können interessante Fortschritte erzielt werden: Die Trennschichten besitzen bei ziemlich konstanter Dicke bereits wesentlich verbesserte Permeabilitäten. Dies wird dadurch erreicht, daß eine anisotrope Trennschicht, bestehend aus einer mikroporösen Haut und einem makroporösen Substrat, über eine feine Klebschicht auf eine Diffusionsmembran (Stützschicht) aufgebracht wird. Die Membran besteht also aus insgesamt vier Schichten. Alle Schichten besitzen - einzeln betrachtet - amorphe Filzstrukturen.

Eine weitere zusammengesetzte HFM wird in der US-A- 3 648 845 vorgestellt. Hier wird eine feine und dichte Trennschicht (vorwiegend aus Celluloseacetat) über eine Deckschicht auf einen porösen Träger (Stützschicht) aufgebracht. Die Deckschicht verhindert weitgehend, daß das Polymer, aus dem die Trennschicht gebildet wird, in die Poren des Trägers eindringt. Auf diese Weise kann zwar eine Trennschicht relativ konstanter und geringer Dicke erzeugt werden, die übrigen Nachteile der amorphen Struktur bleiben jedoch bestehen.

Es wurde sodann versucht, die Deckschicht einzusparen und auf diese Weise den Membranaufbau zu vereinfachen (US-A-3 676 203). In ganz speziellen Fällen ist dieser Versuch gelungen; Trennschichten aus Polyacrylsäure konnten auf Stützschichten aus Celluloseacetat/Cellulosenitrat-Gemischen aufgebracht werden. Diese Membran weist jedoch neben den Nachteilen, die durch die Hydrolyseanfälligkeit der Esterbindungen sowie die Wasserlöslichkeit und Quellbarkeit der Trennschicht gegeben sind, wiederum die Mängel der amorphen Strukturen auf.

In der DE-A- 2 457 355 wird eine zweischichtige HFM beschrieben, die neben anderen günstigen Eigenschaften eine sehr geringe Trennschichtdicke hat und darum bei reversosmotischem Einsatz eine gute Leistung bereits bei mäßigen Drücken erzielen soll. Aus der chemischen Zusammensetzung der Membran und aus dem Verfahren der Aufbringung der Trennschicht muß jedoch geschlossen werden, daß beide Schichten der Membran amorph sind. Außerdem sind die Leistungen der Membran nicht optimal, was aus den offengelegten Zahlenangaben folgt.

Ein Verfahren zur Herstellung von dünnen Polymerfilmen reproduzierbarer Dicke wird in der DE-A- 2 420 846 bekanntgemacht. Das filmbildende Material ist ein Linearpolymer (zum Beispiel ein Silicon/Polycarbonat-Copolymer). Es wird in einem leichtflüchtigen Lösungsmittel gelöst (zum Beispiel in Chloroform) und auf die Oberfläche einer Flüssigkeit gegossen, in der weder das Lösungsmittel noch das Polymer löslich sind. Bevorzugt wird hierzu Wasser. Die Lösung spreitet auf der Oberfläche, das Lösungsmittel verdampft, und der Film hinterbleibt als eine Schicht von 25 - 50 nm (250 Å bis 500 Å). Zur Beseitigung von Löchern in diesem Film wird empfohlen, mehrere Schichten übereinander zu gießen. Der am Ende resultierende Film kann auf einen porösen Träger aufgebracht werden (zum Beispiel eine Ultrafiltrationsmembran) und stellt zusammen mit diesem dann die gesamte Membran dar, die für Trennzwecke eingesetzt werden kann. Auch in diesem Fall ist die eigentliche Trennschicht amorph und weist die entsprechenden Nachteile auf.

In der Vergangenheit wurde somit noch kein Versuch unternommen, für Hyperfiltrationszwecke vom Konzept der amorphen Trennschicht mit Filzstruktur abzurücken. Bis heute gibt es für diesen Zweck keine Trennschichten, die sowohl eine hohe Durchlässigkeit haben als auch gleichzeitig ein hohes Trennvermögen und eine lange Standzeit besitzen.

In der Literaturstelle Macromolecules, Bd. 13 (1980), Seiten 1478 bis 1483, werden, insbesondere auf Seite 1478, polymerisierte monomolekulare Schichten beschrieben. Diese werden auf Glasplättchen aufgezogen, welche dann als Stützschichten, jedoch nicht als poröse Stützschichten, fungieren. Diese Membranen sind für Trennprozesse also ungeeignet.

In der US-A- 3 129 146 werden eine Methode und insbesondere eine Apparatur zur Reversosmose beschrieben. Die Apparatur ist in ihren Grundzügen ein Plattenmodul, wie er heutzutage verschiedentlich für RO-Prozesse eingesetzt wird. Die Methode besteht darin, daß die Hochdruck- und Niederdruckseite nicht - wie heute üblich - durch eine Membran voneinander getrennt sind, sondern durch einen dünnen Spalt, der mit Gas (Luft, Wasserstoff) oder Flüssigkeit (Öl) gefüllt sein soll. Damit Gas oder Flüssigkeit während des Betriebes der Zelle nicht aus dem Spalt verdrängt werden, sollen sie unter einem Druck stehen, der noch höher ist als der Druck der Hochdruckseite, aber nicht so hoch, daß dadurch die Zelle ihre Funktionstüchtigkeit einbüßen würde (siehe Anspruch 1d). Kapillarkräfte an den beiden Begrenzungen des Spaltes sollen dafür sorgen, daß das Spalt-Medium nicht unter dem Einfluß seines Druckes aus dem Spalt ausgetrieben wird.

Es ist offensichtlich, daß der Betrieb dieser Zelle einer aufwendigen Regelung bedarf, die erstens den Spaltdruck laufend registriert und zweitens die Druckdifferenz zwischen Hochdruckseite und Spalt konstant hält, wobei erschwerend hinzukommt, daß der Druck der Hochdruckseite im Verlauf des-Prozesses laufend steigt, die Kapillarkräfte - als Materialkonstante - aber konstant bleiben. Eine Druckmessung in einem Spalt von ca. 10 nm (Spalte 3, Zeile 6) ist aber praktisch nicht durchführbar. Der Verzicht auf Druckmessung und -regelung im Spalt wäre gleichbedeutend mit dem Verzicht auf Nachlieferung von Spaltmedium. Dies würde mit Sicherheit die Funktionstüchtigkeit der Zelle bald beenden, da jedes Spaltmedium in den angrenzenden wäßrigen Phasen eine endliche Löslichkeit besitzt und darum mehr oder weniger schnell aus dem Spalt verschwindet.

Als "Öle" werden in der US-A- 3 129 146 auch Fettsäuren, Glyceride, Steroide und Phospholipoide genannt (Spalte 5, Zeile 33-47) sowie ein Verfahren zum Einbringen dieser Substanzen in den Spalt (Spalte 5, Zeile 48-69).

In der US-A- 3 892 665 wird die Herstellung von monomolekularen Trennschichten beschrieben. Es wird auch angegeben, daß diese Trennschichten sich auf poröse Träger übertragen lassen, insbesondere auf Hohlfasern (vgl. Spalte 4, Zeilen 4/5).

Die monomolekularen Schichten bestehen aus linearpolymeren Substanzen, die auf der Oberfläche eines Langmuir-Troges bis auf einen geeigneten Druck komprimiert werden. Die Kettenmoleküle liegen dann streckenweise parallel zueinander in der Grenzfläche und die Kettenabstände sind in diesen Bereichen ziemlich gut definiert. Diese Methode vermeidet also die Ausbildung von Polymer-Schlaufen, die im Falle dickerer, "dreidimensionaler" Membranen zu den bekannten breiten Porengrößenverteilungen führten. Sie stellt darum mit Sicherheit einen Fortschritt dar gegenüber der Verwendung amorpher Trennschichten.

Tenside spielen in der US-A- 3 892 665 nur insofern eine Rolle, als sie in geringen molekularen Anteilen (0,1 bis 4 Gew.-%) zur mechanischen Stabilisierung der molekularen Schichten dienen (höherer Kollapsdruck) (Spalte 7, Zeilen 31-34). Da die Monoschicht nur direkt auf einen porösen Träger gebracht werden kann, werden die Monoschichten zunächst auf einem nichtporösen Träger erzeugt, dort vernetzt und dann auf einen porösen Träger übertragen (Spalte 4, Zeilen 43-53). Daraus folgt aber, daß die Verwendung poröser Träger mit nichtplanarer Geometrie, also speziell die Verwendung von Hohlfasern, Röhren etc. aus topologischen Gründen gar nicht möglich ist.

Der vorliegenden Erfindung liegt somit die Aufgabe zugrunde, Membranen zur Verfügung zu stellen, die eine hohe Durchlässigkeit und eine lange Standzeit besitzen, auf einfache Weise herzustellen sind und die Nachteile der bekannten Membranen nicht aufweisen.

Diese Aufgabe kann dadurch gelöst werden, daß man die Trennschichten nach demselben physikalisch-chemischen Prinzip herstellt, das in dem Lipoidfilm biologischer Membranen realisiert ist. Dieser Lipoidfilm besitzt eine wohlgeordnete Samtstruktur - im Gegensatz zur amorphen Filzstruktur der Trennschichten technischer Membranen. Er zeigt eine hohe Durchlässigkeit für Wasser, ein sehr gutes Rückhaltevermögen für die meisten Salze, er hat wohldefinierte Durchlässigkeiten für niedermolekulare Substanzen, und er ist insbesondere sehr dünn. Seine Dicke liegt zwischen 2 - 4 nm (20 und 40 Å); das ist weniger als ein Zehntel der Dicke von Trennschichten der bekannten technischen Membranen und entspricht damit der Trennschichtdicke, die für technische Membranen mit gutem Durchsatz anzustreben ist.

Der Lipoidfilm hat infolge der Orientierung der Lipoidmoleküle eine Pallisaden- oder Samtstruktur, wobei die langen Achsen der Alkylketten senkrecht zur Membranebene und somit parallel zur Diffusionsrichtung stehen. Umwegfaktoren sind praktisch zu vernachlässigen. Die hohe Wasserdurchlässigkeit und das gute Rückhaltevermögen des Filmes, beispielsweise für Salze, werden dadurch bewirkt, daß die Alkylketten der Lipoide Gruppen mit Weichmacherfunktionen enthalten (Doppelbindungen, seitenständige Methylgruppen, Cyclopropylgruppen).

Diese Gruppen verhindern das Kristallisieren der Lipoidmoleküle und halten den Film in einem

zweidimensional-flüssigen Zustand. Die Packungsdichte der Lipoidmoleküle in diesen flüssigen Filmen ist einerseits so locker, daß sie den Durchtritt zum Beispiel einzelner Wassermoleküle ermöglicht, andererseits aber so eng, daß Wasser-Cluster sich nicht ausbilden können - ähnlich wie bei den amorphen Trennschichten mit Filzstruktur. Die Abstände zwischen den einzelnen Lipoidmolekülen sind jedoch - anders als bei der Filzstruktur - sehr genau definiert, und die Abstandverteilung ist schmal. Der Einbau geeigneter Seitenketten oder funktioneller Gruppen in die Hauptketten gewährleistet die genaue Einhaltung der Lipoidmolekül-Abstände. Infolgedessen ist das Trennvermögen der Lipoidfilme sehr ausgeprägt. Darüber hinaus sind Lipoidfilme dieser Art infolge der fast ausschließlich hydrophoben Bindung zwischen den aliphatischen Ketten der Moleküle "selbstheilend" gegenüber kleinen Verletzungen. Es sei auch erwähnt, daß die Lipoidschichten biologischer Membranen optisch aktiv sind.

Die Permeabilität biologischer Membranen ist aber nicht allein durch die Permeabilität ihrer bimolekularen Lipoid-Regionen bestimmt, sondern auch dadurch, daß diese Lipoid-Regionen in der Lage sind, hydrophobe Carrier- oder Porenmoleküle zu solubilisieren oder auf andere Weise aufzunehmen. Diese Carrier oder Poren können in vielen Fällen eine hochselektive und schnelle Diffusion kleiner Moleküle von einer Membranoberfläche zur anderen vermitteln.

Aus neueren Untersuchungen ist bekannt, daß auch künstliche monomolekulare und bimolekulare Filme sich als Matrix für den Einbau von Carriern oder von Molekülen eignen, die in ihrem Inneren selektiv permeable Kanäle besitzen. Diese Porenmoleküle bestimmen dann ganz wesentlich das Permeabilitätsverhalten des gesamten Filmes.

Aufgrund von Untersuchungen an Lipoid-Monoschichten auf Wasseroberflächen ist auch bekannt, daß bei höheren Flächendrücken die seitlichen Abstände zwischen endständigen Festladungen praktisch den theoretischen Mindestabständen bei dichtester zweidimensionaler Packung entsprechen; durch Variation des Flächendrucks sind sie in gewissen Grenzen kontinuierlich einstellbar.

Das physikalisch-chemische Bauprinzip, das in biologischen Lipoidfilmen realisiert ist, kann jedoch aus mehreren Gründen nicht ohne Einschränkungen und Modifikationen auf Trennschichten technischer Membranen übertragen werden. Die Lipoidfilme der meisten biologischen Membranen stellen nämlich sogenannte "bimolekulare" Strukturen dar. Hierbei handelt es sich um reversible Aggregate von Lipoidmolekülen, deren jedes eine wasserlösliche Kopfgruppe und einen wasserunlöslichen Kohlenwasserstoffrest besitzt. Die Aggegrate sind im Prinzip genauso strukturiert wie die plättchenförmigen Mizellen, die in höherkonzentrierten wäßrigen Lösungen von Tensiden vorliegen. Sodann befinden sich biologische Lipoidfilme in aller Regel in einem Milieu von mittleren pH-Werten und mäßiger Temperatur. An die chemische Stabilität der Lipoide werden darum keine besonders hohen Anforderungen gestellt. Im einzelnen müssen bei der Übertragung des physikalischchemischen Bauprinzips der Lipoidfilme biologischer Membranen auf Trennschichten technischer Membranen folgende Nachteile der Lipoidfilme berücksichtigt werden:

(1) Bimolekulare Lipoidfilme werden praktisch nur durch hydrophobe und elektrostatische Bindungen zusammengehalten und strukturiert. Sie sind deshalb grundsätzlich wasserlöslich, und ihre Standzeit für technische Zwecke ist unzureichend. Darüber hinaus werden Lipoidmoleküle von Tensidmizellen solubilisiert, und darum sind Lipoidfilme in tensidhaltigen, wäßrigen Lösungen besonders instabil. Im technischen Betrieb läßt sich jedoch die Anwesenheit von Tensiden häufig nicht vermeiden.

(2) Die Bindung der biologischen bimolekularen Lipoidfilme an die übrigen Komponenten der biologischen Membran ist gleichfalls weitgehend elektrostatischer oder hydrophober Natur. Hauptvalenzbindungen sind relativ selten. Eine analoge Verankerung eines Lipoidfilms als Trennschicht auf einer technischen Gel- oder Stützschicht würde gleichfalls nicht zu einem Produkt mit ausreichenden Standzeiten im technischen Einsatz führen.

(3) Die geladenen Kopfgruppen biologischer Lipoide sind meist hydrolyseempfindlich (Cholinphosphorsäureester, Äthanolaminphosphorsäureester usw.) und die Oberflächenladungsdichten biologischer Lipoidfilme pH-abhängig. Beide Eigenschaften erschweren den Einsatz von biologischen Lipoidfilmen als Trennschichten technischer Membranen. Die Hydrolyseempfindlichkeit würde die Standzeit verringern, und ein elektrostatischer Schutz gegen "fouling" würde nur in begrenzten pH-Bereichen gegeben sein.

Diese Labilität biologischer Lipoidfilme, die ihren unmittelbaren Einsatz als Trennschichten technischer Membranen verbietet, läßt sich überraschenderweise unter Beibehaltung der wesentlichen physikalisch-chemischen Eigenschaften der Filme auf folgende Weise beseitigen:

ad (1) Anstelle bimolekularer Filme aus monofunktionellen Lipoidmolekülen werden monomolekulare Filme aus bi- oder mehrfunktionellen Lipoiden oder Tensiden hergestellt. Dieses etwas modifizierte Bauprinzip ist in jüngster Zeit auch bei den Membranen sehr spezialisierter Mikroorganismen (Thermoplasma acidophilum, Sulfolobus acidocaldarius) gefunden worden, die sich an einen sehr niedrigen pH-Wert und an hohe Temperaturen angepaßt haben und deren Membranen darum besonders

hydrolysestabil sind.

ad (2) Von den verschiedenen Möglichkeiten, eine monomolekulare Trennschicht auf eine poröse Stützschicht stabil aufzutragen, seien zwei Verfahren als Beispiele genannt:

Einmal können mono- oder bifunktionelle Lipoide oder Tenside durch Ausnutzung reaktionsfähiger Gruppen (zum Beispiel Doppelbindungen) innerhalb der Trennschicht miteinander polymerisiert und über weitere funktionelle Gruppen und eventuell unter Zwischenschaltung einer Gelschicht an die Stützschicht fixiert werden. In diesem Fall muß grundsätzlich ein Verlust an Selbstheilungsvermögen in Kauf genommen werden, weil diese Art der Quervernetzung die freie Beweglichkeit der hydrophoben Lipoidketten einschränkt. Dieser Nachteil läßt sich aber zum Teil dadurch aufheben, daß man Lipoide oder Tenside mit zwei hydrophoben Ketten verwendet, von denen nur eine polymerisierbare Gruppen trägt, während die andere als intramolekularer Weichmacher dient.

Eine andere Möglichkeit ist die Verwendung von Lipoid- oder Tensidmolekülen, deren hydrophile Endgruppe aus einer längeren und reaktiven Kette besteht, die relativ tief in die Gel- oder die Stützschicht eindringt. Diese Ketten übernehmen gleichzeitig die Quervernetzung der Trennschichtmoleküle und die Anknüpfung der Trennschicht an die Gel- bzw. die Stützschicht. Bei diesem Verfahren findet die Quervernetzung also nicht im hydrophoben Teil der Trennschicht statt, und darum bleibt das Selbstheilungsvermögen der Trennschicht erhalten.

ad (3) Zur Vermeidung der Hydrolyseempfindlichkeit der Kopfgruppen und zum Erzielen einer pH-unabhängigen Oberflächenladungsdichte müssen die Lipoid- oder Tensidmoleküle der Trennschicht als geladene Kopfgruppen nach Möglichkeit entweder Sulfonsäure- oder Phosphonsäuregruppen besitzen. Diese Gruppen sind nur wenig hydrolyseempfindlich und auch in sauren Lösungen noch dissoziiert.

Die Notwendigkeit, die Trennschichtoberfläche (bzw. die der Stützschicht abgewandten Enden der Lipoid- oder Tensidmoleküle) mit fixierten Ladungen zu versehen, ergibt sich jedoch nur dann, wenn die Membran in wäßrigem Milieu eingesetzt werden soll, zum Beispiel bei der Wasserentsalzung. In anderen Fällen, also insbesondere beim Einsatz in organischem Milieu, zum Beispiel bei der Pervaporation von Kohlenwasserstoffgemischen, ist die Anwesenheit fixierter Oberflächenladungen nicht erforderlich. Auch die Hydrolyseempfindlichkeit der biologischen Lipoide kann sich unter solchen Umständen nicht nachteilig auswirken. Soll also die Membran für Trennzwecke in organischem Milieu eingesetzt werden, so kann ihre Trennschicht die Struktur einer halben bimolekularen Lipoidmembran besitzen und auch unmittelbar aus geeigneten biologischen Lipoiden bzw. analog gebauten Tensiden hergestellt werden. Die Trennschicht besteht dann also aus einem monomolekularen Film von Lipoiden oder Tensiden, deren hydrophobes Ende der zu trennenden organischen Phase zugewandt ist.

Es liegt auf der Hand, daß für die Herstellung monomolekularer Trennschichten auch optisch aktive Tenside oder tensidartige Lipoide herangezogen werden können. Eine chirale Oberfläche von monomolekularen Trennschichten läßt sich auch dadurch herstellen, daß man die Tensidmoleküle nach Herstellung der eigentlichen Trennschicht endständig modifiziert, zum Beispiel durch Umsetzung mit optisch aktiven Sultonen oder Aminosäurederivaten.

Schließlich können auch die monomolekularen Trennschichten zum Solubilisieren oder Einlagern von hydrophoben Carrier- oder Porenmolekülen benutzt werden, wenn Interesse daran besteht, die hohe Transportselektivität dieser Moleküle technisch zu nutzen. Ein bekanntes Beispiel für einen hydrophoben $K^+$-selektiven Carrier ist das Valinomycin, ein Beispiel für ein hydrophobes Proteinmolekül mit einem $K^+$-selektiven Kanal ist das Gramicidin.

Gegenstand der Erfindung ist eine Hyperfiltrationsmembran, enthaltend eine poröse Stützschicht und eine Trennschicht, die dadurch gekennzeichnet ist, daß die Trennschicht aus einem quervernetzten, monomolekularen Film von Molekülen besteht, wobei

(a) die Moleküle der Trennschicht im unvernetzten Zustand Tenside oder tensidartige Lipoide mit mindestens einer hydrophoben Kette und mindestens einer hydrophilen Gruppierung sind,

(b) die hydrophoben Ketten dieser Moleküle nach der Quervernetzung vorwiegend senkrecht zur Membranebene orientiert sind und

(c) die Moleküle der Trennschicht über funktionelle Gruppen in mindestens einer ihrer hydrophoben Ketten und/oder über funktionelle Gruppen in mindestens einer ihrer hydrophilen Gruppierungen miteinander quervernetzt sind.

Gegenstand der Erfindung ist weiterhin ein Verfahren zur Herstellung der oben genannten Hyperfiltrationsmembran, welches dadurch gekennzeichnet ist, dass man

(a) die Tensidmoleküle oder die tensidartigen Lipoidmoleküle unter Einstellung eines definierten Spreitungsdruckes auf der Oberfläche einer wäßrigen Lösung oder in der Grenzfläche zwischen einer wäßrigen Lösung und einer damit nicht mischbaren Flüssigkeit zu einem monomolekularen Film spreitet,

(b) die Moleküle des Films miteinander vernetzt und

(c) die so erhaltene Trennschicht auf eine poröse Stützschicht aufbringt oder auf eine Gelschicht, die durch Trocknen und gegebenenfalls durch weiteres Vernetzen in eine poröse Stützschicht überführt wird.

Bei dem erfindungsgemäßen Verfahren verwendet man im einfachsten Fall Tenside oder tensidartige Lipoide mit einem stark hydrophilen Kopf und einem hydrophoben Schwanz. Man kann aber Tenside oder tensidartige Lipoide verwenden, die dadurch gekennzeichnet sind, daß sie ein langes hydrophobes Mittelstück enthalten, das an seinem einen Ende eine stark hydrophile Gruppierung und an seinem entgegengesetzten Ende eine schwach hydrophile Gruppierung besitzt, wobei

(1) der hydrophile Charakter der stark hydrophilen Gruppierung einerseits und der hydrophobe Charakter des hydrophoben Schwanzes bzw. des hydrophoben Mittelstückes andererseits so aufeinander abgestimmt sind, daß das Tensidmolekül zwar als Ganzes keine nennenswerte Wasserlöslichkeit besitzt, sich aber auf der Oberfläche wäßriger Lösungen bzw. in der Grenzfläche zwischen einer wäßrigen Lösung und einer damit nicht mischbaren organischen Flüssigkeit gut spreiten läßt (und zwar mit der schwach hydrophilen Gruppierung dem Gasraum oder der organischen Flüssigkeit zugewandt), wobei

(2) der hydrophobe Schwanz bzw. das hydrophobe Mittelstück polymerisierbare Gruppen enthält und damit eine Möglichkeit zur Quervernetzung mit hydrophoben Mittelstücken mindestens zweier benachbarter Moleküle aufweist und/oder die stark hydrophile Gruppierung reaktive polymerisierbare und/oder addierbare und/oder kondensierbare Gruppen enthält und damit die Möglichkeit zur Quervernetzung mit stark hydrophilen Gruppierungen mindestens zweier benachbarter Tensidmoleküle und mit anderen Molekülen bietet, die in der wäßrigen Phase gelöst sind und aus denen nach der Vernetzung mit den Tensidmolekülen und miteinander die Gel- oder die Stützschicht der Membran besteht, und wobei

(3) die schwach hydrophile Gruppierung die Möglichkeit der Ankopplung einer stärker hydrophilen Gruppierung bietet oder sich selbst in eine stärker hydrophile Gruppierung umwandeln läßt, d.h. daß die schwach hydrophile Gruppierung die Möglichkeit der Ankopplung einer Sulfonsäure-, Phosphonsäure-, Schwefelsäure-, Phosphorsäure-, Aminosäure-, Carbonsäuregruppe, einer primären, sekundären oder tertiären Aminogruppe oder einer quaternären Ammoniumgruppe oder einer anderen positiv geladenen Gruppe oder einer anderen stark hydrophilen Gruppe bietet bzw. sich selbst in eine Sulfonsäure-, Phosphonsäure-, Schwefelsäure-, Phosphorsäure-, Aminosäure- oder Carbonsäuregruppe oder in eine primäre, sekundäre oder tertiäre Aminogruppe oder eine quaternäre Ammoniumgruppe, eine andere positiv geladene Gruppe oder in eine andere stark hydrophile Gruppe umwandeln läßt.

Bevorzugt verwendet man Tenside oder tensidartige Lipoide, wie oben beschrieben, die sich dadurch auszeichnen, daß ihr hydrophober Schwanz bzw. ihr hydrophobes Mittelstück aus linearen oder verzweigten Kohlenwasserstoffketten und/oder aus partiell oder vollständig halogenierten linearen oder verzweigten Kohlenstoffketten oder aus linearen oder verzweigten Siliconketten besteht.

Andere bevorzugt verwendete Tenside oder tensidartige Lipoide zeichnen sich dadurch aus, daß sie an ihrem der Gel- oder der Stützschicht zugewandten Ende an mindestens einer ihrer hydrophoben Ketten oder im Bereich ihrer stark hydrophilen Gruppierung mindestens eine Sulfonsäure-, Phosphonsäure-, Schwefelsäure-, Phosphorsäure- oder Carbonsäuregruppe oder eine andere, im dissoziierten Zustand negativ geladene Gruppe oder eine primäre, sekundäre oder tertiäre Aminogruppe oder eine quaternäre Ammoniumgruppe oder eine andere positiv geladene Gruppe enthalten.

Weitere bevorzugte Tenside oder tensidartige Lipoide sind solche, bei denen der Grundkörper ihrer Kohlenwasserstoffreste aus Tri-, Tetra- und höheren Terpenen, speziell Carotinoiden, besteht.

Bevorzugt verwendet man weiterhin Tenside oder tensidartige Lipoide, die als polymerisierbare Funktionen in ihrem hydrophoben Schwanz bzw.in ihrem hydrophoben Mittelstück Diengruppierungen oder Diacetylengruppierungen enthalten. Andere geeignete Tenside oder tensidartige Lipoide zeichnen sich dadurch aus, daß es sich bei den zur Vernetzung geeigneten stark hydrophilen Gruppen um Reste von Mono-, Di-, Tri- oder höheren Sacchariden oder um Reste von Onsäuren, Zuckersäuren oder Aminozuckern oder um Reste von Aminosäuren oder Oligopeptiden oder um Reste von mehrwertigen Alkoholen, Aldehyden, Carbonsäuren oder Aminen oder um Gruppierungen mit mehreren Carbonsäureester-, Epoxy-, Episulfid- und Sulfhydrylfunktionen oder um Gruppierungen mit aktivierten Doppelbindungen, wie Vinylsulfonen, oder um Gruppierungen mit maskierten Isocyanaten, wie Carbonsäureaziden, handelt. Die Ketten des hydrophoben Mittelstücks der Tenside können weiterhin durch Sauerstoffgruppen unterbrochen sein.

Erfindungsgemäß werden nacheinander

(1) die Tensidmoleküle oder die tensidartigen Lipoidmoleküle unter Einstellung eines definierten mittleren gegenseitigen Abstands an der Oberfläche oder der Grenzfläche einer wäßrigen Lösung gespreitet,

(2) die gespreiteten Tensidmoleküle oder tensidartigen Lipoidmoleküle entweder im hydrophoben oder im hydrophilen Teil des monomolekularen Filmes miteinander vernetzt,

(3) gegebenenfalls das nur schwach hydrophile Ende der Tensidmoleküle oder der tensidartigen Lipoidmoleküle in eine Sulfonsäure-, Phosphonsäure-, Schwefelsäure-, Phosphorsäure-, Aminosäure-

oder Carbonsäuregruppe oder in eine primäre, sekundäre oder tertiäre Aminogruppe oder eine quaternäre Ammoniumgruppe, eine andere positiv geladene Gruppe oder in eine andere stark hydrophile Gruppe umwandelt oder um eine Gruppierung verlängert, die ihrerseits eine Sulfonsäure-, Phosphonsäure-, Schwefelsäure-, Phosphorsäure-, Aminosäure- oder Carbonsäuregruppe oder in eine primäre, sekundäre oder tertiäre Aminogruppe oder eine quaternäre Ammoniumgruppe, eine andere positiv geladene Gruppe oder eine andere hydrophile Gruppe entweder in offenem Zustand oder in verkapptem Zustand enthält, und im letzteren Falle die verkappte hydrophile Gruppe öffnet und

(4) die quervernetzte Trennschicht auf eine poröse und mechanisch stabile Stützschicht aufbringt.

Die hier aufgezählte Reihenfolge der Schritte ist nicht unbedingt zwingend. So kann zum Beispiel die Aufbringung der Tensidmoleküle auf die Stützschicht vor der Vernetzung erfolgen. Welche Reihenfolge im Einzelfall gewählt wird, hängt u.a. von der Stabilität der gespreiteten monomolekularen Filme ab. So sollte die nachträgliche Hydrophilierung der schwach hydrophilen Enden der Tensidmoleküle bei instabilen monomolekularen Filmen erst nach der Aufbringung der Trennschicht auf die Stützschicht erfolgen.

Die Trennschicht muß auch nicht unmittelbar auf die Stützschicht aufgebracht werden. Es kann vielmehr auch eine poröse Gelschicht dazwischengeschoben werden, wenn zum Beispiel die Oberfläche der Stützschicht zu rauh ist. Das poröse Gel kann auch in die Poren der Stützschicht eingebracht werden, wenn diese zu groß sind, als daß die monomolekulare Trennschicht sie ohne weitere mechanische Abstützung überspannen könnte. Dies ist zum Beispiel angeraten, wenn die HFM bei sehr hohen Drücken arbeiten soll.

In günstigen Fällen ist es ausreichend, die Trennschicht auf die Stützschicht einfach aufzulegen. Dies ist der Fall, wenn die HFM in hydrophobem Milieu eingesetzt wird. In anderen Fällen ist eine Vernetzung von Trenn- und Stützschicht (bzw. Gelschicht) notwendig, damit die Trennschicht sich nicht wieder ablösen kann. Dies ist zum Beispiel dann angeraten, wenn die HFM für Trennprozesse in wäßrigen tensidhaltigen Lösungen verwendet werden soll.

Die Aufbringung der Trennschicht auf die Stützschicht kann auf verschiedene Art und Weise erfolgen. Die Wahl des Verfahrens hängt in erster Linie davon ab, ob kleine oder große Membranflächen hergestellt werden müssen:

Für kleine Membranflächen eignen sich am besten solche Methoden, die dem Langmuir- oder dem Blodgett-Verfahren nachempfunden sind. Hierbei wird der monomolekulare Film auf der Oberfläche der Subphase von einer Barriere bis zu einem vorbestimmten Spreitungsdruck komprimiert. Frühestens dann kann der Film quervernetzt werden. Das Aufbringen auf die poröse Stützschicht erfolgt am einfachsten durch Absenken des Flüssigkeitsspiegels, nachdem zuvor direkt unter der Wasseroberfläche eine poröse Stützmembran leicht geneigt oder eben angebracht worden war. Der vernetzte monomolekulare Film legt sich auf die Stützschicht auf, dazwischen befindliches Wasser drainiert entweder zwischen dem Film und der Stützschicht ab, oder es verdampft, oder es wird durch die Stützschicht hindurch abgesaugt, und der Film überdeckt am Ende die gesamte Fläche der Stützschicht. Beide Schichten haften jetzt relativ fest aneinander. An dieser Stelle können dann die beiden Schichten miteinander vernetzt werden. Daran könnte sich als letzter Schritt die nachträgliche Hydrophilierung der Trennschichtoberfläche anschließen.

Die Reihenfolge der Schritte kann auch vertauscht werden. Der monomolekulare Film wird zuerst auf die Stützmembran abgesenkt und dann, entweder allein oder mit der Stützschicht zusammen, vernetzt.

Ein nicht ganz so präzises aber einfacheres Verfahren zur Aufbringung der Trennschicht auf die Stützschicht, das auch zur Herstellung großflächiger Membranen verwendet werden kann, verzichtet auf die Barriere zur Einstellung eines definierten Spreitungsdrucks. Statt dessen wird eine wohldefinierte Menge von Tensid auf der Oberfläche einer Lösung gespreitet, die sich in einem Trog mit trichterförmigem Oberteil und mit hydrophoben Wänden (PTFE) befindet. Das Absenken des Flüssigkeitsspiegels führt hier zu einer Kompression des monomolekularen Filmes bis auf eine vorher bestimmte Fläche. Die Dosierung der aufgetragenen Menge an Tensid muß so genau sein, daß die vorher bestimmte Fläche beim Absenken genau dort erreicht wird, wo der Obere trichterförmige Teil des Troges endet und der untere zylindrische bzw. prismatische Teil beginnt. Weiteres Absenken führt dann zu keiner weiteren Filmkompression. Das eigentliche Aufbringen der Trennschicht auf die Stützschicht und die Vernetzungsreaktionen erfolgen wie oben.

Bei einem dritten Verfahren wird die Stützschicht bei konstantem Spreitungsdruck von unten aus der wäßrigen Subphase heraus und durch den monomolekularen Film hindurchgezogen. Auch hier drainiert das Wasser zwischen Film und Stützschicht ab.

Eine vierte Möglichkeit besteht darin, daß die Stützschicht im leichten Winkel von oben in die monomolekulare (vernetzte oder unvernetzte) Tensidschicht eingetaucht und mit dieser unter die Wasseroberfläche gedrückt wird. Hierzu eignen sich natürlich am besten hydrophobe Stützschichten.

Ein fünftes Verfahren bietet sich an, wenn das Tensid noch eine deutliche Löslichkeit in unpolaren organischen Medien besitzt. Das Tensid und/oder die Stützschicht sollten in diesem Fall reaktive Gruppen

besitzen und ohne die Zugabe zusätzlicher Vernetzungsreagenzien miteinander reagieren können. Das Tensid wird in der organischen Phase gelöst und die hydrophile - gegebenenfalls feuchte - Stützmembran einfach in diese Lösung eingetaucht oder durch sie hindurchgeführt. Tensid und Stützschichtoberfläche reagieren dann miteinander unter Bildung eines monomolekularen Oberflächenfilms. Das Tensid kann so gewählt sein, daß es in Gegenwart von Wasser auch mit sich selbst vernetzt. In diesem Fall erhält man eine quervernetzte Trennschicht. Die restlichen Manipulationen erfolgen bei Bedarf, wie bereits oben geschildert. Dieses Verfahren kann dann angewendet werden, wenn die Poren der Stützschicht nicht zu groß sind oder mit einem porösen Gel oberflächlich verschlossen wurden oder wenn die ganze Stützschicht mit einer Gelschicht überzogen ist.

Es liegt nahe, eines dieser fünf Verfahren auch als kontinuierliche Methode oder quasi-kontinuierliche Methode zur Beschichtung von Stützschichten in Form von Endlosbändern zu modifizieren.

Als poröse Stützschicht können beinahe alle mechanisch stabilen und porösen Körper verwendet werden. Die Wahl der Stützschicht hängt in erster Linie davon ab, ob und wie sie mit der Trennschicht vernetzt werden soll und welche Anforderungen an ihre chemische, mechanische und thermische Stabilität gestellt werden.

Die erfindungsgemäßen Membranen weisen alle diejenigen Merkmale auf, die das hohe Trennvermögen und die guten kinetischen Eigenschaften der Lipoidfilme biologischer Membranen bestimmen. Sie besitzen darüber hinaus eine hohe "fouling"-Resistenz.

Aus diesen Gründen sind sie für den Einsatz in technischen Trennverfahren außerordentlich gut geeignet. Dabei ist in erster Linie an die Meerwasserentsalzung, an die Abwassseraufbereitung, an Teilaspekte der Erdölraffination und an die Trennung optischer Antipoden gedacht.

Die Meerwasserentsalzung mit Hilfe der Reversosmose (Hyperfiltration) ist den häufig angewandten Destillationsverfahren aus energetischen Gründen überlegen. Membranverfahren verlaufen isotherm und benötigen statt hoher Verdampfungsenthalpien vergleichsweise geringe Beträge an osmotischer Arbeit in Form von Pump-Energie. Dieser Vorteil der Membranverfahren gegenüber Destillationsverfahren wurde in der Vergangenheit durch die Nachteile zu geringen Durchsatzes und geringer Standzeiten überkompensiert, was den großtechnischen Einsatz von Membranverfahren zur Meerwasserentsalzung verhinderte oder zumindest sehr verzögerte. Die erfindungsgemäßen Membranen zeigen gegenüber den bisher bei der Meerwasserentsalzung eingesetzten Membranen einen wesentlich erhöhten Durchsatz und auch verbesserte Standzeiten, so daß nunmehr die wesentlichen Argumente gegen den großtechnischen Einsatz von Membranverfahren zur Gewinnung von Süßwasser aus dem Meer entfallen.

Die Abwasseraufbereitung ist dasjenige Einsatzgebiet der erfindungsgemäßen Hyperfiltrationsmembranen, in welchem die hohe elektrische Oberflächenladungsdichte der nachträglich hydrophilierten Trennschichten am stärksten zur Geltung kommt, weil auf diesem Gebiet das "fouling" von schwächer oder gar dicht geladenen Oberflächen die Membranstandzeiten am stärksten beeinträchtigt.

Die Auftrennung von Gemischen organischer Flüssigkeiten, insbesondere die Kohlenwasserstofftrennung ($C_8$-Gemische) durch Pervaporation ist bisher aus dem Versuchsstadium kaum herausgewachsen. Die Pervaporation (Verdampfung durch Membranen hindurch) ist ebenfalls ein Hyperfiltrationsverfahren, aber genauso an Phasenübergänge gebunden wie die Destillationsverfahren; sie ist diesen also energetisch etwa gleichwertig. Der Durchsatz eines Pervaporationsverfahrens ist niedriger als der eines Destillationsverfahrens. Pervaporationsverfahren können aber theoretisch eine außerordentlich hohe Selektivität aufweisen; und es ist in erster Linie der Mangel an Selektivität, der den praktischen Einsatz von Pervaporationsverfahren in der Vergangenheit verhindert hat. Die erfindungsgemäßen Membranen verfügen über die hohe Selektivität, die für den technischen Einsatz von Pervaporationsverfahren vorausgesetzt werden muß. HFM für Pervaporationszwecke müssen nicht unbedingt monomolekulare Trennschichten aus bifunktionellen Tensiden haben, da in diesem Fall das "fouling" keine Rolle spielt und darum die Trennschicht keine negative Oberflächenladung benötigt. Pervaporationsmembranen können also auch aus monofunktionellen Tensiden hergestellt werden und stellen darum die einfachste Version von HFM des hier beschriebenen Typs dar.

Die Trennung optischer Antipoden mittels Hyperfiltration durch chirale Trennschichten stellt ein Verfahren dar, das sich wegen des praktisch zweidimensional-kristallinen Charakters der eng gepackten Trennschichten durch besonders große Selektivität auszeichnet und außerdem einen wesentlich größeren Durchsatz gestattet als entsprechende Verfahren ähnlicher Selektivität - insbesondere das Kristallisationsverfahren. Die Hyperfiltration ist darüber hinaus sehr schonend. Da zur Erzeugung von Trennschichten aus Tensiden nur vergleichsweise geringe Mengen von Tensiden erforderlich sind, ist auch die Herstellung von Trennschichten aus optisch aktiven Tensiden und/oder die nachträgliche Chiralisierung von primär optisch inaktiven Tensiden in $\omega$-Stellung nicht besonders kostspielig.

Die Trennschicht der erfindungsgemäßen Membranen ist im allgemeinen 2 - 6 nm (20 bis 60 Å),

vorzugsweise 2 - 5 nm (20 bis 50 Å), und am meisten bevorzugt 2 - 4 nm (20 bis 40 Å) dick. Sofern erforderlich, können die Trennschichten auch wesentlich dicker sein. Es ist jedoch ein besonderer Vorteil der erfindungsgemäßen Membranen, daß Trennschichten mit einer Dicke von 5 nm (50 Å) bereits eine ausreichende Festigkeit besitzen und ein gutes Trennvermögen zeigen.

Die Dicke der Stützschicht liegt im Bereich zwischen 0,05 mm und 1,0 mm, vorzugsweise bei 0,1 mm. Die Stützschicht kann jedoch auch, sofern erforderlich, dicker oder dünner sein.

Anhand der beigefügten Zeichnungen (Figuren 1 bis 11) und der folgenden Kommentare werden die erfindungsgemäßen Membranen sowie die Begriffe "Trennschicht mit Filzstruktur", "Trennschicht mit Samtstruktur", "bimolekularer Film", "monomolekularer Film", "Stützschicht", "Gelschicht", "monofunktionelle Lipoide", "bi- und mehrfunktionelle Lipoide" etc. näher erläutert; es zeigen:

Figur 1 einen Querschnitt durch eine herkömmliche Membran (eine Trennschicht 1 mit Filzstruktur ist auf einer grobporigen Stützschicht 2 aufgebracht);

Figur 2 einen Querschnitt durch eine erfindungsgemäße Membran (eine Trennschicht mit Samtstruktur 3 ist auf der grobporigen Stützschicht 2 aufgebracht);

Figur 3 einen Querschnitt durch eine andere erfindungsgemäße Membran (eine Trennschicht mit Samtstruktur 3 befindet sich auf einer feinporigen Gelschicht 4, die ihrerseits auf der grobporigen Stützschicht 2 aufgebracht ist);

Figur 4 einen Querschnitt eines aus zwei aufeinanderliegenden monomolekularen Schichten bestehenden Filmes aus monofunktionellen Lipoiden bzw. Tensiden (die funktionellen Gruppen (Kreise) sind hydrophile Gruppen);

Figuren 5 bis 8 Querschnitte von monomolekularen Filmen; in Figur 5 ist ein monomolekularer Film aus monofunktionellen Lipoiden bzw. Tensiden dargestellt (die funktionellen Gruppen (Kreise) sind hydrophile Gruppen);

Figur 6 einen monomolekularen Film aus bifunktionellen Lipoiden bzw. Tensiden (die funktionellen Gruppen (Kreise) sind hydrophile Gruppen);

Figur 7 einen monomolekularen Film aus trifunktionellen Lipoiden bzw. Tensiden (die beiden gleichen funktionellen Gruppen (Kreise) sind hydrophile Gruppen, die dritte funktionelle Gruppierung (Schwanz) stellt einen weiteren hydrophilen Rest dar);

Figur 8 einen quervernetzten, monomolekularen Film aus trifunktionellen Lipoiden bzw. Tensiden (die beiden gleichen funktionellen Gruppen (Kreise) sind hydrophile Gruppen, die dritte funktionelle Gruppe dient zur Quervernetzung im hydrophoben Teil des Filmes); und

Figuren 9 bis 11 Querschnitte von erfindungsgemäßen Trennschichten, die an eine Stützschicht angebunden sind.

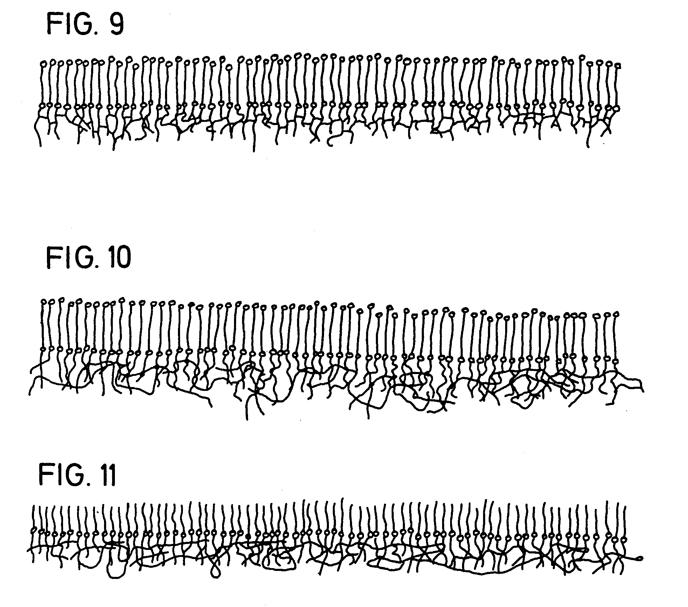

In Figur 9 ist ein quervernetzter monomolekularer Film aus trifunktionellen Lipoiden bzw. Tensiden dargestellt. Die beiden funktionellen Gruppen (Kreise) sind hydrophile Gruppen, die dritte funktionelle Gruppierung - hier ein weiterer hydrophiler Rest - dient zur Quervernetzung im hydrophilen Teil des Filmes. In Figur 10 ist ein quervernetzter, monomolekularer Film aus trifunktionellen Lipoiden bzw. Tensiden dargestellt. Die beiden gleichen funktionellen Gruppen (Kreise) sind hydrophile Gruppen, die dritte Gruppierung stellt einen weiteren hydrophilen Rest dar. Die Quervernetzung erfolt über Makromoleküle der Subphase (Gel- oder Stützschicht). In Figur 11 ist ein quervernetzter, monomolekularer Film aus bifunktionellen Lipoiden bzw. Tensiden dargestellt. Die Moleküle besitzen eine fixierte Ladung (Kreise) und eine andere hydrophile Gruppierung, über die sie mit den Makromolekülen der Subphase (Gel- oder Stützschicht) vernetzt sind. Die hydrophoben Ketten der Lipoide bzw. Tenside liegen exponiert an der Oberfläche der Trennschicht.

Von den folgenden Kommentaren gelten diejenigen, die im Zusammenhang mit den Tensiden gemacht werden, gleichermaßen für die Tenside, die zur Herstellung der Trennschichten verwendet werden, und für die in den Trennschichten enthaltenen Tenside. Der im folgenden verwendete Ausdruck "Tenside" soll auch tensidartige Lipoide mit umfassen. Unter "Tensiden" versteht man allgemein grenzflächenaktive Verbindungen, wohingegen Lipoide fettähnliche Substanzen sind. Tensidartige Lipoide sind somit grenzflächenaktive, fettähnliche Substanzen. Die Einführung einer Gelschicht zwischen Trennschicht und Stützschicht ist dann erforderlich, wenn die Porendurchmesser der Stützschicht so groß sind, daß sie von der quervernetzten Trennschicht nicht überspannt werden können, oder wenn die quervernetzte Trennschicht allein keine ausreichende mechanische Stabilität besitzt. Die Gelschicht kann aus demselben Material bestehen, aus dem auch die Stützschicht besteht, nur sollen ihre Porendurchmesser hinreichend klein sein. Die Gelschicht der Membran wird im folgenden nicht ausdrücklich von der Stützschicht separat behandelt, sondern als Bestandteil der Stützschicht betrachtet.

Lipoide, die ein hydrophobes Mittelstück und zwei voneinander verschiedene hydrophile Endgruppen enthalten und deren stärker hydrophile Endgruppierung die Möglichkeit zur Quervernetzung mit den

entsprechenden Gruppen mindestens zweier gleicher Moleküle besitzt, werden in der Literatur zwar beschrieben, aber nicht für technische Zwecke verwendet (Biochimica et Biophysica Acta, 360 (1974) 217-229, 487 (1977), 37-50).

Das hydrophobe Mittelstück kann eine geradkettige oder verzweigtkettige aliphatische Gruppe sein, wie eine geradkettige oder verzweigtkettige Alkyl-, Alkenyl- der Alkinylgruppe. Ein Teil der Wasserstoffatome der aliphatischen Gruppe des hydrophoben Mittelstücks oder alle Wasserstoffatome können durch Fluoratome oder andere Halogenatome ersetzt sein.

Die Ketten des hydrophoben Mittelstücks können weiterhin durch Sauerstoffatome unterbrochen sein. Das hydrophobe Mittelstück kann eine oder mehrere Doppel- oder Dreifachbindungen enthalten. Enthält es mehrere Doppel- oder Dreifachbindungen, so sind diese bevorzugt konjugiert angeordnet. Das hydrophobe Mittelstück kann weiterhin gleichzeitig Doppelbindungen und Dreifachbindungen aufweisen.

Das hydrophobe Mittelstück kann auch eine gemischt aliphatisch/aromatische Kette enthalten. Enthält das hydrophobe Mittelstück eine gemischt aromatisch/aliphatische Kette, so gelten für den aliphatischen Teil die gleichen Definitionen, wie oben angegeben. Als aromatischen Teil kann das hydrophobe Mittelstück zum Beispiel eine Phenylengruppe oder Naphthylengruppe enthalten.

Das hydrophobe Mittelstück kann auch aus zwei parallelliegenden aliphatischen Ketten oder aus parallelliegenden aromatischen Ketten oder aromatisch/aliphatischen Ketten, wie oben beschrieben, bestehen. Diese Ketten können untereinander verbunden sein.

Beispiele für hydrophobe Mittelstücke werden im folgenden aufgeführt. Das hydrophobe Mittelstück kann zum Beispiel eine gerade (a), (f), (g) oder eine verzweigte (b), (e) aliphatische Kette oder eine gemischt aromatisch/aliphatische Kette (c) sein. Es kann sich auch um zwei parallelliegende Ketten (d), (e), (g) handeln, die an ihren Enden miteinander verbunden sind.

(a) $X - (CH_2)_n - Y$ (n=12-44)

(b) $X - [CH_2-CH(CH_3)-CH_2-CH_2]_n - Y$ (n=4-12)

(c) 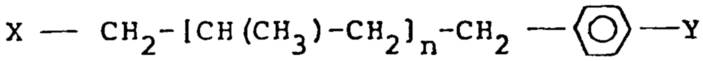 (n=3-14)

(d) 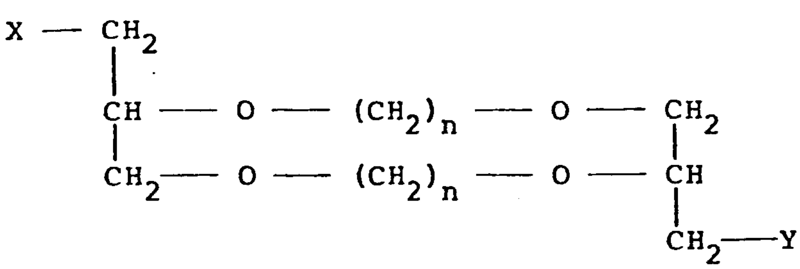 (n=12-44)

(e) 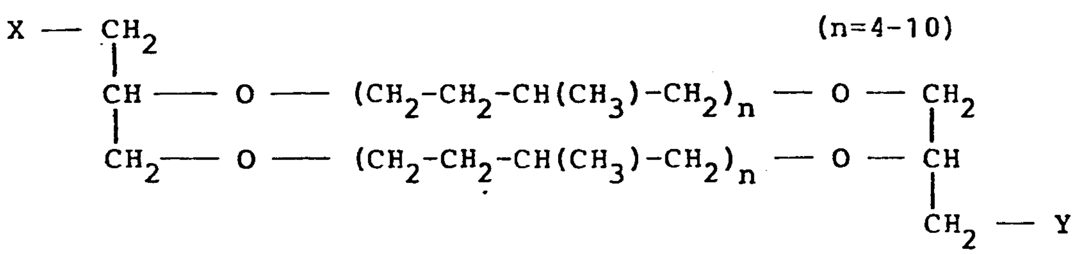 (n=4-10)

(f) $X - (CH_2)_n - C \equiv C - C \equiv C - (CH_2)_n - Y$ (n=6-22)

(g) 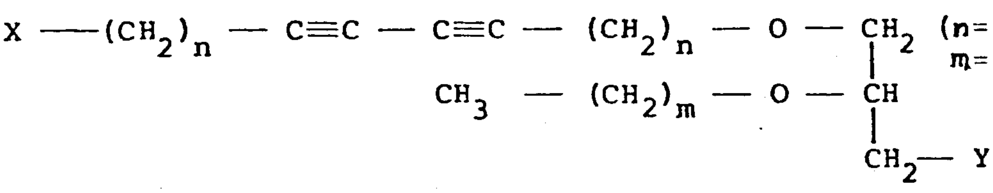 (n=6-22; m=12-44)

In den Beispielen (a) bis (g) bedeutet Y die stark hydrophile und X die schwach hydrophile Gruppierung. Bei den Beispielen (a) bis (e) handelt es sich um Tenside, die über die stark hydrophile Gruppierung Y miteinander und mit den Molekülen der Stützschicht vernetzt werden; bei den Beispielen (f) und (g) handelt es sich um Tenside, die über funktionelle Gruppen in den hydrophoben Mittelstücken miteinander vernetzt werden. Die Anknüpfung an die Stützschicht erfolgt in diesen Fällen über die stark hydrophilen Gruppierungen Y. Im Beispiel (g) enthält das Tensidmolekül eine zweite Kohlenwasserstoffkette als Weichmacher. Bei dem Beispiel (e) handelt es sich um ein Kohlenwasserstoffgerüst, das dem eines Membranlipoids von Thermoplasma acidophilum ähnelt.

Die Anzahl der Kohlenstoffatome im hydrophoben Mittelstück orientiert sich an der Anzahl der Kohlenstoffatome in biologischen Membranlipoiden. Der hydrophobe Schwanz biologischer Lipoide enthält etwa 12 bis 22 Kohlenstoffatome. Die Dicke eines bimolekularen Lipoidfilms entspricht darum etwa 24 bis 44 Kohlenstoffatomen. Die hydrophoben Mittelstücke der erfindungsgemäß vorgeschlagenen Tenside enthalten darum - wenn es sich um Kohlenwasserstoffreste handelt - gleichfalls bis zu 44 Kohlenstoffatome, vorzugsweise bis zu 36 Kohlenstoffatome. Handelt es sich bei dem hydrophoben Mittelstück um teilweise fluorierte Kohlenwasserstoffe oder um perfluorierte Kohlenstoffe, so kann die maximale Anzahl der Kohlenstoffatome wesentlich niedriger sein. Die Aufzählung der Beispiele (a) bis (g) ist nicht erschöpfend.

In den Formeln (a) bis (g) können die Wasserstoffatome der aliphatischen Gruppen vollständig oder ganz durch Fluoratome ersetzt sein.

In den Formeln (a) und (d) bedeutet n 12 bis 44, vorzugsweise 18 bis 40 und besonders bevorzugt 24 bis 36.

In der Formel (g) besitzt m die gleiche Bedeutung wie n in den Formeln (a) und (d).

In der Formel (b) bedeutet n 4 bis 12, vorzugsweise 6 bis 10, am meisten bevorzugt 7 bis 9.

In der Formel (c) bedeutet n 3 bis 14, vorzugsweise 6 bis 12, am meisten bevorzugt 9 oder 10.

In der Formel (e) bedeutet n 4 bis 10, vorzugsweise 7 bis 9, am meisten bevorzugt 8.

In der Formel (f) bedeutet n 6 bis 22, vorzugsweise 8 bis 18, am meisten bevorzugt 10 bis 16.

Die stark hydrophile Gruppierung Y der Tenside kann sein: ein Rest eines Mono-, Di- oder höheren Oligosaccharids (zum Beispiel Reste beliebiger Hexosen, Heptulosen, Octolosen sowie von Saccharose, Lactose, Maltose oder Raffinose), ein Rest eines Di-, Tri- oder Oligopeptids mit mehreren reaktiven Seitengruppen (zum Beispiel Reste von Polyserin, Polylysin, Polyhydroxyprolin, Polyornithin), ein Rest eines Polyalkohols (zum Beispiel Reste beliebiger Hexite, Heptite, Octite und von Polyvinylalkohol), ein Rest eines Polyamins (zum Beispiel ein Rest des Polyvinylamins). Es kann sich auch um Reste von mehreren, über Ätherbrücken miteinander verbundenen Zuckermolekülen handeln. Eine weitere Möglichkeit sind die kurzkettigen Kondensationsprodukte von Epichlorhydrin und Glycidol. Diese Aufzählung von Möglichkeiten ist nicht erschöpfend. Wesentlich ist, daß die stark hydrophile Gruppierung über so viele reaktive Gruppen verfügt, daß sie gleichzeitig mit mindestens zwei weiteren der stark hydrophilen Gruppierungen benachbarter Tensidmoleküle und eventuell mit einem Polymermolekül der Subphase vernetzt werden kann.

In den Tensiden kann die schwach hydrophile Gruppierung X sein: zum Beispiel -OH, $-NH_2$, -SH, -CHO,

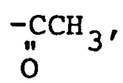

-CH = CH-COOR, -CH = $CH_2$,

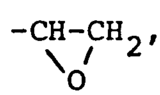

-CN, $-CON_3$ -COOR, -SR, $-S_2R$, -SCN oder ein Halogenatom (Chlor, Brom, Jod), wobei auch diese Aufzählung nicht vollständig ist. Auch -COOH-Gruppen können sich als schwach hydrophile Gruppierungen unter besonderen Bedingungen eignen. Wichtig ist, daß die schwach hydrophile Gruppierung sich in eine negative Festladung oder eine andere hydrophile Gruppe umwandeln oder sich um eine Gruppe mit negativer Festladung oder eine andere hydrophile Gruppe verlängern läßt. Hierbei sollte es sich vorzugsweise um das Anion einer Sulfonsäure handeln.

Der Begriff "keine nennenswerte Wasserlöslichkeit" bedeutet, daß die Tensidmoleküle, welche auf die Oberfläche einer wäßrigen Phase aufgebracht werden, auch auf dieser Oberfläche verbleiben und sich nicht oder "nicht nennenswert" in der wäßrigen Phase auflösen. Die Löslichkeit in der wäßrigen Phase sollte

möglichst kleiner als $10^{-6}$, vorzugsweise kleiner als $10^{-8}$, Mol/l sein. Wird die monomolekulare Tensidschicht in der Grenzfläche zwischen einer wäßrigen und einer organischen Phase aufgebaut, so soll auch die Löslichkeit in der organischen Phase möglichst niedrig sein.

Der Begriff "Spreiten" ist ein spezieller Begriff der Grenzflächenchemie, der jedem Fachmann auf diesem Gebiet geläufig ist. Man versteht darunter die Tatsache, daß Moleküle, die sich auf einer Oberfläche bewegen können, diese Oberfläche auch vollständig für ihre Bewegung beanspruchen - so wie die Moleküle eines Gases das ganze ihnen zur Verfügung stehende Volumen für ihre Bewegung beanspruchen. Auf einer Oberfläche gespreitete Moleküle verhalten sich formal wie ein zweidimensionales Gas.

Der mittlere Abstand zwischen gespreiteten Molekülen ergibt sich aus ihrer Anzahl pro $cm^2$ Fläche. Dieser Abstand läßt sich vorgeben durch die Fläche, die einer bestimmten Anzahl von Molekülen für die Spreitung zur Verfügung gestellt wird. Die Spreitung muß nicht unbedingt an der Grenzfläche zwischen einer flüssigen und einer gasförmigen Phase erfolgen, sie kann auch in der Grenzfläche zwischen zwei nicht mischbaren Flüssigkeiten - zum Beispiel Wasser und Benzin - stattfinden. Aus Spreitungsversuchen ergibt sich der minimale Flächenbedarf einer senkrecht auf der Wasseroberfläche stehenden geradkettigen längeren Fettsäure oder Kohlenwasserstoffkette zu rund 0,25 $nm^2$ (25 $Å^2$). Für die Bedeckung von $1 m^2$ Oberfläche mit einem dichten Rasen solcher Moleküle benötigt man demnach etwa $4 \cdot 10^{18}$ Moleküle. Der Flächenbedarf von Tensidmolekülen ist pro Kohlenwasserstoffkette ihres hydrophoben Teils ebenfalls rund 0,25 $nm^2$ (25 $Å^2$). Sind die Kohlenwasserstoffketten verzweigt oder halogeniert oder enthalten sie zum Beispiel aromatische Ringe, so ist ihr Flächenbedarf entsprechend größer. Ist die stark hydrophile Endgruppierung des Tensids voluminöser als der hydrophobe Teil des Moleküls, so bestimmt die hydrophile Gruppe den Flächenbedarf des Moleküls. Ist die Löslichkeit der Moleküle in der wäßrigen (und gegebenenfalls auch in der organischen) Phase und die Adsorptionsdichte an den Gefäßwänden bekannt, so läßt sich die Anzahl von Tensidmolekülen in der Oberfläche oder Grenzfläche der wäßrigen Phase exakt vorausbestimmen und auch experimentell einstellen. Dies gelingt am einfachsten dann, wenn die Löslichkeit in den beiden Phasen und die Adsorptionsdichte an den Gefäßwänden praktisch Null ist. Man löst dann das Tensid in einem leicht flüchtigen oder wasserlöslichen Lösungsmittel oder Lösungsmittelgemisch, wie zum Beispiel Äthylalkohol oder Chloroform/Methanol, und pipettiert diese Lösung vorsichtig auf die Oberfläche oder in die Grenzfläche. Das Lösungsmittel verschwindet dann in den angrenzenden Phasen, und die Tensidmoleküle hinterbleiben in der Oberfläche bzw. in der Grenzfläche.

Als Ausgangsmaterial für das erfindungsgemäße Verfahren können auch Lipoide und daraus gewonnene hydrophobe Grundkörper von Tensiden verwendet werden, die aus Membranen von Mikroorganismen, insbesondere aus den Membranen von Thermoplasma acidophilum und Sulfolobus acidocaldarius, gewonnen wurden. Die Zellmembran des Mikroorganismus Thermoplasma acidophilum besitzt aufgrund der extremen Umweltbedingungen (optimales Wachstum des Organismus bei pH. 2,0 und 59°C) eine außergewöhnliche mechanische Stabilität sowie hohe physikalische und chemische Resistenz. Hierdurch unterscheidet sie sich von allen bisher untersuchten biologischen Membranen.

Das wesentlichste Strukturelement dieser Membranen ist ein bifunktionelles Lipoid, das auch für die Säure- und Temperaturresistenz verantwortlich ist. Dieses Lipoid durchspannt die gesamte Membran und weist die im folgenden Formelschema aufgeführten Strukturmerkmale auf:

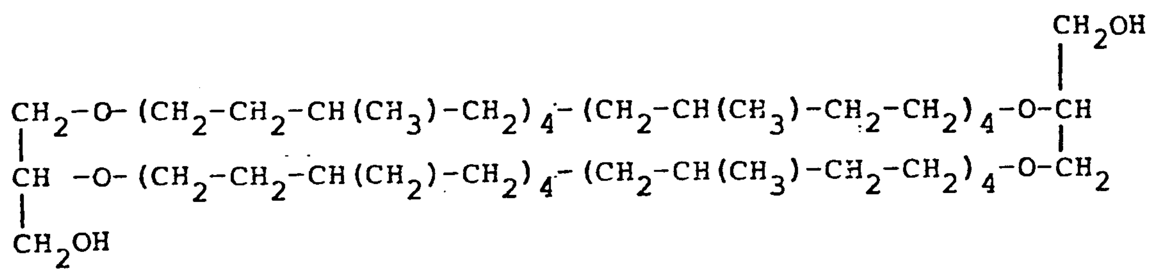

Dieses im folgenden als DGTE bezeichnete Lipoid kann bei dem erfindungsgemäßen Verfahren als Ausgangsmaterial verwendet werden. Als Grundbaustein für die erfindungsgemäßen Membranen besitzt es besondere Vorteile. Durch die ätherartige Verknüpfung zwischen hydrophoben Anteilen und polaren Kopfgruppen erhält es hohe Säurefestigkeit. Die Kettenverzweigungen ersetzen funktionell die in anderen Lipoiden biologischen Ursprungs vorhandenen Doppelbindungen, wodurch die Gefahr oxidativer Kettenaufspaltung vermieden wird. Schließlich werden die hydrophoben Bezirke in der Molekülmitte durch kovalente Bindungen miteinander verknüpft.

DGTE ist Baustein einer Anzahl von Varianten, die in unterschiedlichen Mengenverhältnissen das

Membrangerüst bilden. Während das dem Zellinneren zugewandte Molekülende stets nur über die freie primäre alkoholische Gruppe verfügt, trägt die nach außen orientierte Gruppe Substituenten unterschiedlicher Größe und Polarität.

Quantitativ vorherrschend ist ein Phospholipoid mit einem Phosphoryl-Monoglycosylrest. Daneben kommen, in geringeren Mengen, einige andere anionische Phosphilipoide vor.

Von besonderem Interesse für das erfindungsgemäße Verfahren ist auch Lipopolysaccharid, bei dem der Substituent aus einem linearen Polysaccharid mit einem Glucoseanteil und 24 Mannoseresten besteht. Die Glucose bildet dabei die Brücke zwischen DGTE und der Polymannose. Der Mannoserest kann enzymatisch bis auf den Rest -Glu-Man-Man abgespalten werden. Die Isolierung dieses Triglycosyl-Diglycerol-Tetraäthers ist relativ leicht. Da sich die Substanz sehr gut auf Wasser spreiten und in der Subphase vernetzen läßt, ist sie für das erfindungsgemäße Verfahren von besonderem Interesse.

Die DGTE-haltigen Lipoide haben einen Anteil von mehr als 40% an der Gesamtlipoidfraktion der Zellen. Sie lassen sich relativ einfach isolieren und reinigen, so daß nach Aufbau einer Massenzüchtung und Verfahrensoptimierung ausreichende Mengen an den einzelnen Lipoidfraktionen zur Verfügung stehen.

Hinsichtlich der Gewinnung dieser Lipoide aus biologischen Membranen und ihrer Eigenschaften wird auf die Arbeit von Thomas A. Langworthy in Biochem. Biophys. Acta (Amsterdam) 487 (1977), Seiten 37 bis 50 und die dort aufgeführten Literaturstellen verwiesen.

Beispiel 1

Herstellung einer monomolekularen Hyperfiltrationstrennschicht durch Polymerisation von gespreiteten Tensiden mit Diacetylengruppen

Die Substanz $CH_3$-$(CH_2)_{12}$-C≡C-C≡C-$(CH_2)_8$-COOH (Hexacosa-10, 12-diin-1-säure) wird in einer Chloroformlösung (1 mg Substanz/ml Lösung) auf die Wasseroberfläche in einem Langmuirtrog aufgetragen, Nach Verdunsten des Lösungsmittels (5 Minuten) wird der hinterbliebene monomolekulare Film bei 20°C bis auf einen Druck von 15 mM/m (15 dyn/cm) komprimiert. Durch Bestrahlung mit ultraviolettem Licht (254 nm) für 6 Minuten wird der Film polymerisiert. Durch Absenken des Wasserspiegels wird der Film auf eine schwach geneigte asymmetrische Ultrafiltrationsmembran aus regenerierter Cellulose (Sartorius, Spezialanfertigung) als porösen Träger aufgebracht.

Beispiel 2

Herstellung einer monomolekularen Hyperfiltrationstrennschicht durch Copolymerisation von gespreiteten Tensiden mit Acrylsäure- und Methacrylsäureestergruppen

Die Substanz

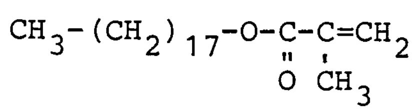

(I)

und die Substanz

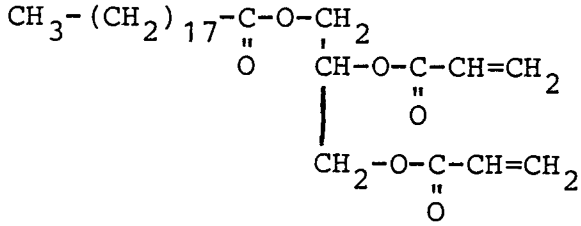

(II)

werden im Verhältnis von 0,95 mg I und 0,05 mg II in 1 ml Chloroform gelöst. Die Lösung wird, ähnlich wie in Beispiel 1, bei 20°C auf einem Langmuirtrog gespreitet und nach Verdunsten des Chloroforms bis auf einen Druck von 23 mN/m (20 dym/cm) komprimiert. Die Polymerisation des Filmes wird wie in Beispiel 1

durch Bestrahlung mit ultraviolettem Licht (254 nm) erreicht. Durch Absenken des Wasserspiegels wird der Film auf eine asymmetrische Ultrafiltrationsmembran aus Cellulosetriacetat (Sartorius, SM 145 39) aufgebracht.

Beispiel 3

Fixierung einer monomolekularen Hyperfiltrationstrennschicht auf einem porösen Träger

Es wird wie in Beispiel 1 verfahren mit dem Unterschied, daß die Chloroformlösung zusätzlich eine kleine Menge von $CH_3-(CH_2)_{12}-C\equiv C-C\equiv C-(CH_2)_8-O-PO(OH)_2$ (Monophosphorsäureester von Pentacosa-9,10-diin-1-ol) enthält (5% der Gewichtseinwaage an Carbonsäuren). Der Film wird wie in Beispiel 1 polymerisiert und auf eine asymmetrische Ultrafiltrationsmembran aus regenerierter Cellulose (Sartorius, Spezialanfertigung) abgesenkt. Die Membran wird sodann dem Langmuirtrog entnommen und in einer trockenen Kammer für eine Stunde bei 30°C getempert. Hierbei wird die Trennschicht an die Stützschicht fixiert.

Beispiel 4

Fixierung einer monomolekularen Hyperfiltrationstrennschicht auf einem porösen Träger

Es wird wie in Beispiel 2 verfahren mit dem Unterschied, daß die Substanzen I und II im Verhältnis von 0,80 mg zu 0,20 mg pro ml Chloroform gelöst werden Als Stützmembran wird eine asymmetrische Ultrafiltrationsmembran aus Cellulosediacetat verwendet, die zuvor mit siedendem Äthylensulfid (56°C) in der Dampfphase behandelt worden war (1 Mol Äthylensulfid pro Mol freier Hydroxylgruppe). Nach Polymerisation des monomolekularen Filmes und nach Aufbringen auf die Stützschicht wird der Film in einer feuchten Kammer in Gegenwart von gasförmigem Trimethylamin bei Raumtemperatur an die Stützmembran fixiert. Dieser Prozeß dauert nicht länger als eine Viertelstunde.

Beispiel 5

Herstellung einer monomolekularen Hyperfiltrationstrennschicht mit hydrophiler Oberfläche und Fixierung der Trennschicht auf einer porösen Stützschicht

Die Substanzen

$$N_3-\underset{\underset{O}{\|}}{C}-(CH_2)_{12}-C\equiv C-C\equiv C-(CH_2)_8-COOH \qquad (I)$$

und

$$CH_3-(CH_2)_{12}-C\equiv C-C\equiv C-(CH_2)_8-COOH \qquad (II)$$

werden im Molverhältnis 1:1 in Chloroform gelöst (insgesamt 1 mg Tensid pro ml $CHCl_3$). Die wäßrige Subphase im Langmuirtrog soll auf pH 8 eingestellt sein. Nach Cospreitung auf dem Langmuirtrog und Verdampfen des Lösungsmittels wird der Film wiederum auf 15 mN/m (15 dyn/cm) komprimiert. Der noch nicht polymerisierte Film wird sodann durch Einsenken einer asymmetrischen Ultrafiltrationsmembran aus Cellulosediacetat von oben in die Subphase des Langmuirtrogs unter konstantem Spreitungsdruck (Durchtauch- oder Stanzverfahren) auf die Stützmembran überführt. Die Polymerisation des Filmes und seine Fixierung an die Stützmembran werden simultan durch Bestrahlung mit ultraviolettem Licht bewirkt.

Beispiel 6

Herstellung einer monomolekularen Hyperfiltrationstrennschicht durch Quervernetzung von gespreiteten Tensiden mit -OH-gruppen

Es wird eine Lösung von n-Octadecylgluconamid in einer Mischung aus 2 Teilen Chloroform und 1 Teil Methanol bei 50°C hergestellt. Die Konzentration der Lösung ist 0,4 mg/ml. Die Lösung wird auf dem Langmuirtrog gespreitet und nach Verdampfen des Lösungsmittels auf 16 mN/m (16 dyn/cm) komprimiert. Der Film ist fest und wird durch Absenken des Wasserspiegels auf eine asymmetrische Ultrafiltrationsmembran aus Cellulosediacetat aufgebracht. Die Membran wird sodann in einer feuchten Kammer bei 20°C mit gasförmigem Epichlorhydrin für 12 Stunden fixiert. Der monomolekulare Film wird auf diese Weise sowohl quervernetzt als auch auf der Stützmembran fixiert.

Beispiel 7

Herstellung einer monomolekularen Hyperfiltrationstrennschicht durch Quervernetzung von cogespreiteten Tensiden mit $-NH_2$- und -OH-Gruppen

Es wird wie in Beispiel 6 verfahren mit dem Unterschied, daß eine Lösung von 0,24 mg Octadecylamin und 0,40 mg n-Octadecylgluconamid pro ml $CHCl_3:CH_3OH$ (2:1) verwendet wird. Der hieraus hergestellte Film ist bei 30 mN/m (30 dyn/cm) flüssig. Nach dem Aufziehen auf eine asymmetrische Ultrafiltrationsmembran aus Cellulosediacetat wird die Membran zunächst bei 20°C für 70 h mit gasförmigem Epichlorhydrin vorfixiert und dann durch Eintauchen in eine 1%ige Lösung von Hexamethylendiisocyanat in Trichloräthylen für die Dauer von 10 Minuten bei Raumtemperatur nachfixiert.

Beispiel 8

Herstellung einer monomolekularen Hyperfiltrationstrennschicht mit negativen Oberflächenladungen durch Quervernetzung von gespreiteten Tensiden mit -OH-Gruppen

Es wird zunächst verfahren wie in Beispiel 6 mit dem Unterschied, daß eine Lösung von ω-Brom-Octadecylgluconamid in einer Mischung von Chloroform/Methanol (2:1) verwendet wird. Nach dem Aufbringen des Filmes auf der Ultrafiltrationsmembran wird wie in Beispiel 7 mit gasförmigem Epichlorhydrin vorfixiert und mit Hexamethylendiisocyanat nachfixiert. Die gesamte Membran wird dann mit Wasser gewaschen, mit einer 5%igen wäßrigen NaSH-Lösung bei 40°C für 30 Minuten behandelt, nochmals gewaschen, dann bei 40°C für 10 Minuten in eine 5%ige Lösung von Propansulton in Toluol gegeben und abschließend noch einmal mit Wasser gewaschen.

Beispiel 9

Herstellung einer monomolekularen Hyperfiltrationstrennschicht mit polarer und chiraler Oberfläche

Es wird verfahren wie in Beispiel 8 mit dem Unterschied, daß die Membran mit d- bzw. l-1-Methylpropansulton behandelt wird.

Beispiel 10

Herstellung einer monomolekularen Hyperfiltrationsmembran durch Vernetzen einer gespreiteten Tensidschicht mit einer Gelschicht aus Polyvinylalkohol

Eine Glasplatte wird nach bekannten Verfahren mit einer monomolekularen Schicht von $Cd^{2+}$-Arachinat überzogen und auf diese Weise hydrophobiert. Die so präparierte Platte wird von oben durch einen bei 30 mN/m (30 dyn/cm) gespreiteten monomolekularen Film aus Octadecylgluconamid und Octadecylamin (siehe Beispiel 7) und einer Geschwindigkeit von 2,4 cm/s vollständig in die wäßrige Subphase eingetaucht. Nach Entfernen des verbleibenden monomolekularen Filmes von der Oberfläche wird die Platte wieder herausgezogen. Sie ist nunmehr mit einem weiteren monomolekularen Film überzogen. Die Platte wird kurz getrocknet und dann in eine 20%ige wäßrige Lösung von Polyvinylalkohol getaucht. Nach weiteren 5 Minuten wird die Platte aus der PVA-Lösung gezogen und zum Ablaufenlassen der anhaftenden Flüssigkeit für weitere 5 Minuten an ihrem oberen Ende aufgehängt. Die dann noch adhärierende PVA-Lösung wird mit einem Filterpapier an der unteren Kante der Platte abgenommen und die Platte danach im Exsiccator über Silicagel getrocknet. Danach wird die Platte in eine Kammer mit gasförmigem Hexamethylendiisocyanat gebracht und dort für 15 Minuten belassen. Danach wird die vernetzte PVA-Tensid-Schicht von der Glasplatte abgezogen und mit Wasser gewaschen.

Beispiel 11

Herstellung einer Hohlfaser mit zwei aufeinandergestapelten monomolekularen Trennschichten zur Trennung von Gasen

Durch einen monomolekularen Film aus Hexacosa-10, 12-diin-1-säure, gespreitet bei 20 ° C und bei 20 mN/m (20 dyn/cm) auf einer wäßrigen Subphase mit $CdCl_2$ (1 g/l), wird mit einer Geschwindigkeit von 2,4 cm/s eine Hohlfaser aus porösem Polypropylen in die Subphase eingetaucht. Nach vollständigem Eintauchen wird die Hohlfaser bei demselben Druck wieder hochgezogen, zum Drainieren von anhaftender Subphasenflüssigkeit für 5 Minuten mit der untersten Spitze in der Subphase belassen und dann vollständig herausgenommen. Danach wird mit einem Filterpapier die noch anhaftende Flüssigkeit an der Hohlfaserspitze abgenommen. Der aus zwei aufeinandergestapelten monomolekularen Trennschichten bestehende Film auf der Hohlfaseroberfläche wird dann unter langsamem Drehen der Faser vor einem UV-Flächenstrahler 0,4 $mW/m^2$ (4000 $mW/cm^2$) für eine Minute lang quervernetzt.

## Patentansprüche

**1.** Hyperfiltrationsmembran, enthaltend eine poröse Stützschicht und eine Trennschicht, dadurch **gekennzeichnet,** daß die Trennschicht aus einem quervernetzten, monomolekularen Film von Molekülen besteht, wobei
(a) die Moleküle der Trennschicht im unvernetzten Zustand Tenside oder tensidartige Lipoide mit mindestens einer hydrophoben Kette und mindestens einer hydrophilen Gruppierung sind,
(b) die hydrophoben Ketten dieser Moleküle nach der Quervernetzung vorwiegend senkrecht zur Membranebene orientiert sind und
(c) die Moleküle der Trennschicht über funktionelle Gruppen in mindestens einer ihrer hydrophoben Ketten und/oder über funktionelle Gruppen in mindestens einer ihrer hydrophilen Gruppierungen miteinander quervernetzt sind.

**2.** Hyperfiltrationsmembran nach Anspruch 1(a) bis 1(c), wobei mindestens ein Teil der Moleküle der Trennschicht über hydrophile Gruppierungen mit Molekülen der Stützschicht vernetzt ist.

**3.** Hyperfiltrationsmembran nach Anspruch 1(a) bis 1(b), wobei alle Moleküle der Trennschicht über hydrophile Gruppierungen mit Molekülen der Stützschicht vernetzt sind, so daß die Quervernetzung der Moleküle der Trennschicht über die Moleküle der Stützschicht erfolgt.

**4.** Hyperfiltrationsmembran nach Anspruch 1 bis 3, wobei die Trennschicht und die Stützschicht der Membran über eine Gelschicht miteinander verbunden sind und wobei gegebenenfalls die Fixierung der Moleküle der Trennschicht an die Moleküle der Gelschicht erfolgt.

**5.** Hyperfiltrationsmembran nach Anspruch 1 bis 4, wobei mindestens ein Teil der Tensidmoleküle chirale Zentren besitzt.

**6.** Hyperfiltrationsmembran nach Anspruch 5, wobei sich die chiralen Zentren in Resten von Mono-, Di-, Tri- oder höheren Sacchariden oder von Aminosäuren oder Oligopeptiden oder Aminozuckern oder von Onsäuren oder Zuckersäuren oder von Äthersulfonaten befinden bzw. in Derivaten der genannten Substanzen.

**7.** Hyperfiltrationsmembran nach Anspruch 1 bis 6, dadurch **gekennzeichnet,** daß in ihren Trennschichten aus Tensiden bzw. tensidartigen Lipoiden Carriermoleküle oder Porenmoleküle oder Moleküle, die beim Assoziieren zwischen sich Poren bilden, solubilisiert oder auf andere Weise eingelagert sind.

**8.** Verfahren zur Herstellung von Hyperfiltrationsmembranen entsprechend den Ansprüchen 1 bis 7, dadurch gekennzeichnet, daß man
a) die Tensidmoleküle oder die tensidartigen Lipoidmoleküle unter Einstellung eines definierten Spreitungsdruckes auf der Oberfläche einer wäßrigen Lösung oder in der Grenzfläche zwischen einer wäßrigen Lösung und einer damit nicht mischbaren Flüssigkeit zu einem monomolekularen Film spreitet,
b) die Moleküle des Filmes miteinander vernetzt und

c) die so erhaltene Trennschicht entweder auf eine vorgegebene poröse Stützschicht aufbringt oder auf eine Gelschicht, die durch Trocknen und gegebenenfalls durch weitere Vernetzen in eine poröse Stützschicht überführt wird.

**9.** Verfahren nach Anspruch 8, dadurch gekennzeichnet daß man im Anschluß an den Schritt 8(a) zunächst den noch unvernetzten monomolekularen Film auf eine poröse Stützschicht oder auf eine Gelschicht aufbringt und dann die Moleküle des Filmes miteinander zu einer Trennschicht vernetzt.

**10.** Verfahren nach Anspruch 9, dadurch gekennzeichnet, daß man als poröse Stützschicht eine hydrophile Hohlfaser mit poröser Wand oder ein Bündel solcher hydrophiler Hohlfasern zunächst in die wäßrige Phase einbringt, sodann den monomolekularen Film - bestehend aus Tensidmolekülen oder tensidartigen Lipoidmolekülen - auf der Oberfläche der wäßrigen Phase oder in der Grenzfläche zwischen der wäßrigen Phase und einer damit nicht mischbaren flüssigen Phase spreitet, sodann die Hohlfaser bzw. das Hohlfaserbündel bei konstantem Spreitungsdruck durch die Phasengrenze zieht, somit die Hohlfaseroberfläche hydrophil mit dem monomolekularen Film beschichtet, diesen sodann quervernetzt und bei Bedarf Beschichtungs- und Vernetzungsprozeß mehrfach wiederholt, wobei dann Stapel von monomolekularen Filmen entstehen.

**11.** Verfahren nach Anspruch 8 oder 9, dadurch gekennzeichnet, daß in der wäßrigen Subphase oder in den wassergefüllten Poren der Stützschicht ein vernetzbares Gel enthalten oder ein vernetzbares Polymeres gelöst ist, das während der Quervernetzung der Tensidmoleküle oder nach dem Aufbringen der quervernetzten Trennschicht auf die Stützschicht seinerseits mit den Tensidmolekülen oder mit der quervernetzten Trennschicht und gegebenenfalls auch mit sich selbst vernetzt wird.

**12.** Verfahren nach mindestens einem der Ansprüche 9 bis 11, dadurch gekennzeichnet, daß mindestens ein Teil der Tensidmoleküle bzw. der tensidartigen Lipoidmoleküle vor oder nach der Quervernetzung auch mit der Oberfläche der Stützschicht vernetzt wird.

**13.** Verfahren nach mindestens einem der Ansprüche 9 bis 12, dadurch gekennzeichnet, daß nach dem Quervernetzen der Moleküle der Trennschicht und entweder vor oder nach dem Aufbringen der Trennschicht auf die Gel- oder Stützschicht und gegebenenfalls nachdem die verschiedenen Schichten auch miteinander vernetzt wurden, die der Stützschicht abgewandten, schwach hydrophilen Enden der Tensidmoleküle um hydrophile oder hydrophobe Gruppen verlängert oder in hydrophile oder hydrophobe Gruppen umgewandelt werden.

**14.** Verfahren nach Anspruch 13, dadurch gekennzeichnet, daß die der Stützschicht abgewandten, schwach hydrophilen Enden der Tensidmoleküle um optisch aktive hydrophile oder hydrophobe Gruppen verlängert oder in optisch aktive hydrophile oder hydrophobe Gruppen umgewandelt werden.

**15.** Verfahren nach den Ansprüchen 13 und 14, dadurch gekennzeichnet, daß die der Stützschicht abgewandten, schwach hydrophilen Enden der Tensidmoleküle mit Sultonen, gegebenenfalls mit optisch aktiven Sultonen, umgesetzt werden.

**16.** Verfahren nach mindestens einem der Ansprüche 9 bis 12, dadurch gekennzeichnet, daß die Tensidmoleküle bzw. die tensidartigen Lipoidmoleküle zusammem mit hydrophoben Molekülen gespreitet werden, die entweder Carrier darstellen oder die in ihrem Inneren eine Pore enthalten oder die so miteinander assoziieren, daß dabei zwischen ihnen Poren entstehen.

## Claims

**1.** Hyperfiltration membrane containing a porous supporting layer and a separation layer, characterised in that the separation layer consists of a transversely cross-linked, monomolecular film of molecules,

(a) the molecules of the separation layer consisting, in the uncross-linked state, of surfactants or surfactant-type lipoids having at least one hydrophobic chain and at least one hydrophilic grouping,
(b) the hydrophobic chains of these molecules being orientated mainly perpendicularly to the plane of the membrane after the transverse cross-linking and
(c) the molecules of the separation layer being transversely cross-linked with one another via functional groups in at least one of their hydrophobic chains and/or via functional groups in at least

one of their hydrophilic groupings.

2. Hyperfiltration membrane according to Claims 1(a) to 1(c), in which at least part of the molecules of the separation layer is cross-linked with molecules of the supporting layer via hydrophilic groupings.

3. Hyperfiltration membrane according to Claims 1(a) to 1(b), in which all the molecules of the separation layer are cross-linked with molecules of the supporting layer via hydrophilic groupings, so that the transverse cross-linking of the molecules of the separation layer takes place via the molecules of the supporting layer.

4. Hyperfiltration membrane according to Claims 1 to 3, in which the separation layer and the supporting layer of the membrane are connected together by a gel layer and the molecules of the separation layer are optionally fixed to the molecules of the gel layer.

5. Hyperfiltration membrane according to Claims 1 to 4, in which at least a part of the surfactant molecules has chiral centres.

6. Hyperfiltration membrane according to Claim 5, in which the chiral centres are situated in residues of mono-, di-, tri- or higher saccharides or of amino acids or oligopeptides or amino sugars or of onic acids or saccharic acids or of ether sulphonates or in derivatives of the said substances.

7. Hyperfiltration membrane according to Claims 1 to 6, characterised in that carrier molecules or pore molecules or molecules which form pores by association with one another are solubilized or otherwise incorporated in its separation layers of surfactants or surfactant-type lipoids.

8. A process for the preparation of hyperfiltration membranes according to Claims 1 to 7, characterised in that

   a) the surfactant molecules or the surfactant type lipoid molecules are spread out under a specified spreading pressure to form a monomolecular film on the surface of an aqueous solution or in the interface between an aqueous solution and a liquid which is not miscible with said solution,

   b) the molecules of the film are cross-linked with one another and

   c) the separation layer thus obtained is applied either to a previously prepared porous supporting layer or to a gel layer which is converted into a porous supporting layer by drying and optionally by further cross-linking.

9. A process according to Claim 8, characterised in that after step 8(a), the as yet uncross-linked monomolecular film is first applied to a porous supporting layer or to a gel layer and the molecules of the film are then cross-linked with one another to form a separation layer.

10. A process according to Claim 9, characterised in that a hydrophilic hollow fibre having a porous wall or a bundle of such hydrophilic hollow fibres is first introduced into the aqueous phase as a porous supporting layer, the monomolecular film consisting of surfactant molecules or surfactant type lipoid molecules is then spread out on the surface of the aqueous phase or in the interface between the aqueous phase and a liquid phase which is not miscible with said aqueous phase, the hollow fibre or bundle of hollow fibres is then passed through the phase boundary at constant spreading pressure so that the surface of the hollow fibre becomes hydrophilically coated with the monomolecular film, and the said film is then transversely cross-linked and the coating and cross-linking process are repeated several times if necessary to produce stacks of monomolecular films.

11. A process according to Claim 8 or 9, characterised in that a cross-linkable gel is contained in or a cross-linkable polymer is dissolved in the aqueous sub-phase or in the water-filled pores of the protective layer and is then in turn cross-linked with the surfactant molecules or with the transversely cross-linked separation layer and optionally also with itself during the transverse cross-linking of the surfactant molecules or after the application of the transversely cross-linked separation layer to the supporting layer.

12. A process according to at least one of the Claims 9 to 11, characterised in that at least a part of the surfactant molecules or of the surfactant-type lipoid molecules is also cross-linked with the surface of

the supporting layer before or after the transverse cross-linking.

13. A process according to at least one of the Claims 9 to 12, characterised in that after the transverse cross-linking of the molecules of the separation layer and either before or after application of the separation layer to the gel layer or supporting layer and optionally after the various layers have also been cross-linked with one another, the weakly hydrophilic ends of the surfactant molecules facing away from the supporting layer are increased in length by hydrophilic or hydrophobic groups or converted into hydrophilic or hydrophobic groups.

14. A process according to Claim 13, characterised in that the weakly hydrophilic ends of the surfactant molecules facing away from the supporting layer are increased in length by optically active hydrophilic or hydrophobic groups or converted into optically active hydrophilic or hydrophobic groups.

15. A process according to Claims 13 and 14, characterised in that the weakly hydrophilic ends of the surfactant molecules facing away from the supporting layer are reacted with sultones, optionally with optically active sultones.

16. A process according to at least one of the Claims 9 to 12, characterised in that the surfactant molecules or the surfactant type lipoid molecules are spread out together with hydrophobic molecules which are either carriers or contain a pore in their interior or associate with one another so that pores are formed between them.

**Revendications**

1. Membrane d'hyperfiltration contenant une couche de support poreuse et une couche de séparation, caractérisée en ce que la couche de séparation consiste en un film monomoléculaire de molécules réticulé transversalement, dans laquelle
   (a) les molécules de la couche de séparation sont à l'état non réticulé des tensioactifs ou des lipoïdes analogues à des tensioactifs contenant au moins une chaîne hydrophobe et au moins une portion hydrophile,
   (b) les chaînes hydrophobes de ces molécules sont orientées principalement perpendiculairement au plan de la membrane après la réticulation transversale et
   (c) les molécules de la couche de séparation sont réticulées transversalement entre elles par l'intermédiaire de groupes fonctionnels dans au moins l'une de leurs chaînes hydrophobes et/ou par l'intermédiaire de groupes fonctionnels dans au moins l'une de leurs portions hydrophiles.

2. Membrane d'hyperfiltration selon la revendication 1(a) à 1(c) dans laquelle au moins une partie des molécules de la couche de séparation sont réticulées par des portions hydrophiles avec des molécules de la couche de support.

3. Membrane d'hyperfiltration selon la revendication 1(a) à 1(b) dans laquelle toutes les molécules de la couche de séparation sont réticulées par des portions hydrophiles avec des molé-cules de la couche de support de sorte que la réticulation transversale des molécules de la couche de séparation se fait par l'intermédiaire des molécules de la couche de support.

4. Membrane d'hyperfiltration selon les revendications 1 à 3, dans laquelle la couche de séparation et la couche de support de la membrane sont reliées entre elles par une couche de gel et dans laquelle la fixation des molécules de la couche de séparation sur les molécules de la couche de gel se produit éventuellement.

5. Membrane d'hyperfiltration selon les revendications 1 à 4, dans laquelle au moins une partie des molécules de tensioactifs possèdent des centres chiraux.

6. Membrane d'hyperfiltration selon la revendication 5, dans laquelle les centres chiraux se trouvent dans des restes de mono-, di-, trisaccharides ou de saccharides supérieurs ou dans des restes d'acides aminés ou d'oligopeptides ou d'amino sucres ou d'acides cétoniques ou d'acides sacchariques ou d'éthersulfonates ou dans des dérivés des substances citées.

**7.** Membrane d'hyperfiltration selon les revendications 1 à 6, caractérisée en ce que des molécules de support ou des molécules de pores ou des molécules qui forment entre elles des pores par association sont solubilisées ou incorporées d'une autre manière dans ses couches de séparation constituées par des tensioactifs ou des lipoïdes analogues à des tensioactifs.

**8.** Procédé de fabrication de membranes d'hyperfiltration selon les revendications 1 à 7, caractérisé en ce que

(a) on étale en un film monomoléculaire les molécules de tensioactifs ou les molécules de lipoïdes analogues à des tensioactifs en établissant une pression d'étalement définie sur la surface d'une solution aqueuse ou à l'interface entre une solution aqueuse et un liquide non miscible avec celle-ci,

(b) on réticule entre elles les molécules du film et

(c) on applique la couche de séparation ainsi obtenue sur une couche de support poreuse pré-établie ou sur une couche de gel qui est convertie en une couche de support poreuse par séchage et éventuellement par une réticulation supplémentaire.

**9.** Procédé selon la revendication 8, caractérisé en ce qu'à la suite de l'étape 8(a) on applique tout d'abord le film monomoléculaire encore non réticulé sur une couche de support poreuse ou sur une couche de gel puis on réticule entre elles les molécules du film pour former une couche de séparation.

**10.** Procédé selon la revendication 9, caractérisé en ce que l'on introduit tout d'abord dans la phase aqueuse une fibre creuse hydrophile à paroi poreuse ou un faisceau de telles fibres creuses hydrophiles en tant que couche de support poreuse, puis on étale le film monomoléculaire, qui consiste en molécules de tensioactifs ou en molécules de lipoïdes analogues à des tensioactifs, sur la surface de la phase aqueuse ou à l'interface entre la phase aqueuse et une phase liquide non miscible avec celle-ci, puis on tire la fibre creuse ou le faisceau de fibres creuses à travers la limite des phases sous une pression d'étalement constante en recouvrant ainsi de manière hydrophile la surface de la fibre creuse par le film monomoléculaire que l'on réticule ensuite transversalement et, en cas de besoin, on répète plusieurs fois le processus de revêtement et de réticulation pour obtenir ensuite des empilements de films monomoléculaires.

**11.** Procédé selon la revendication 8 ou 9, caractérisé en ce que dans la sous-phase aqueuse ou dans les pores remplis d'eau de la couche de support est contenu un gel réticulable ou est dissous un polymère réticulable qui est réticulé pour sa part avec les molécules de tensioactifs ou avec la couche de séparation réticulée transversalement et éventuellement également avec lui-même au cours de la réticulation transversale des molécules de tensioactifs ou après l'application de la couche de séparation réticulée transversalement sur la couche de support.

**12.** Procédé selon au moins l'une des revendications 9 à 11, caractérisé en ce qu'au moins une partie des molécules de tensioactifs ou des molécules de lipoïdes analogues à des tensioactifs est réticulée également avec la surface de la couche de support avant ou après la réticulation transversale.

**13.** Procédé selon au moins l'une des revendications 9 à 12, caractérisé en ce que les extrémités faiblement hydrophiles des molécules de tensioactifs qui sont distantes de la couche de support sont prolongées par des groupes hydrophiles ou hydrophobes ou sont converties en des groupes hydrophiles ou hydrophobes après la réticulation transversale des molécules de la couche de séparation et avant ou après l'application de la couche de séparation sur la couche de gel ou de support et éventuellement après la réticulation des différentes couches entre elles.

**14.** Procédé selon la revendication 13, caractérisé en ce que les extrémités faiblement hydrophiles des molécules de tensioactifs qui sont distantes de la couche de support sont prolongées par des groupes hydrophiles ou hydrophobes optiquement actifs ou sont converties en des groupes hydrophiles ou hydrophobes optiquement actifs.

**15.** Procédé selon les revendications 13 et 14, caractérisé en ce que les extrémités faiblement hydrophiles des molécules de tensioactifs qui sont distantes de la couche de support sont mises à réagir avec des sultones, éventuellement avec des sultones optiquement actives.

**16.** Procédé selon au moins l'une des revendications 9 à 12, caractérisé en ce que les molécules de

tensioactifs ou les molécules de lipoïdes analogues à des tensioactifs sont étalées en même temps que des molécules hydrophobes qui constituent des supports ou qui contiennent à l'intérieur un pore ou qui s'associent entre elles de telle manière qu'il en résulte des pores entre elles.

FIG. 1

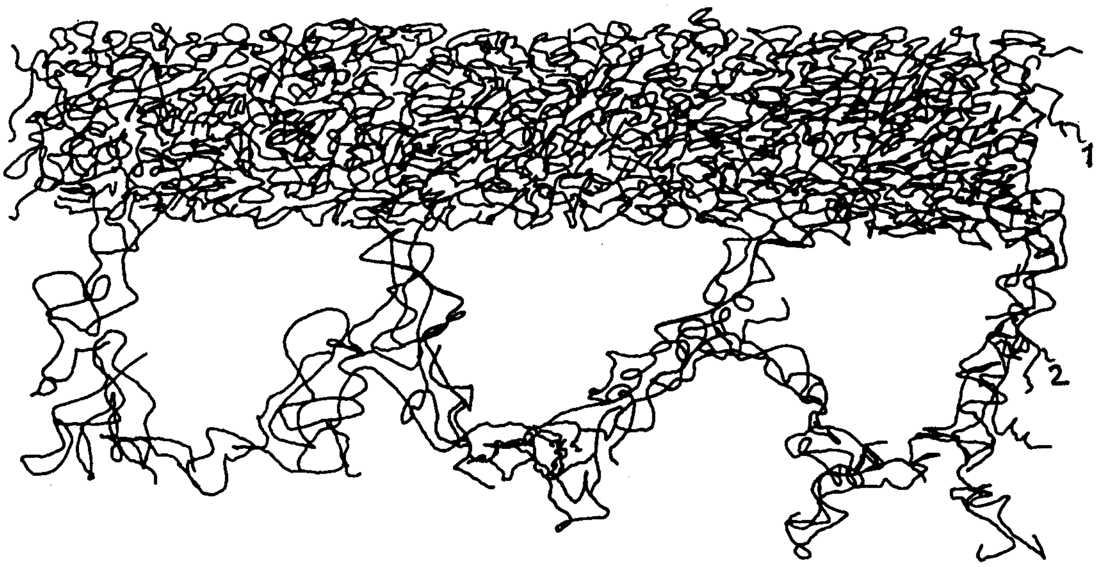


Stand der Technik

FIG. 2

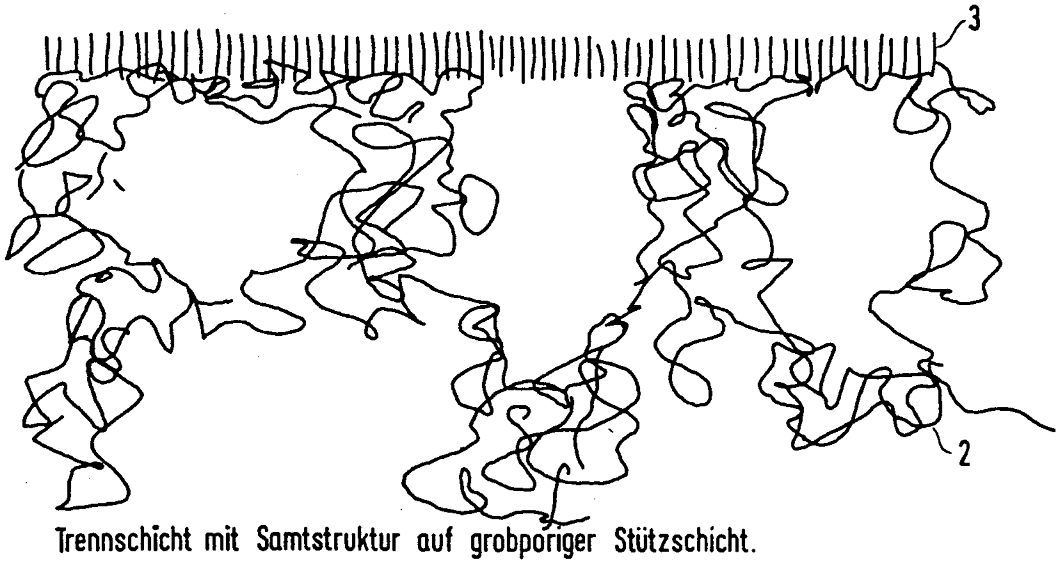


Trennschicht mit Samtstruktur auf grobporiger Stützschicht.

FIG. 3

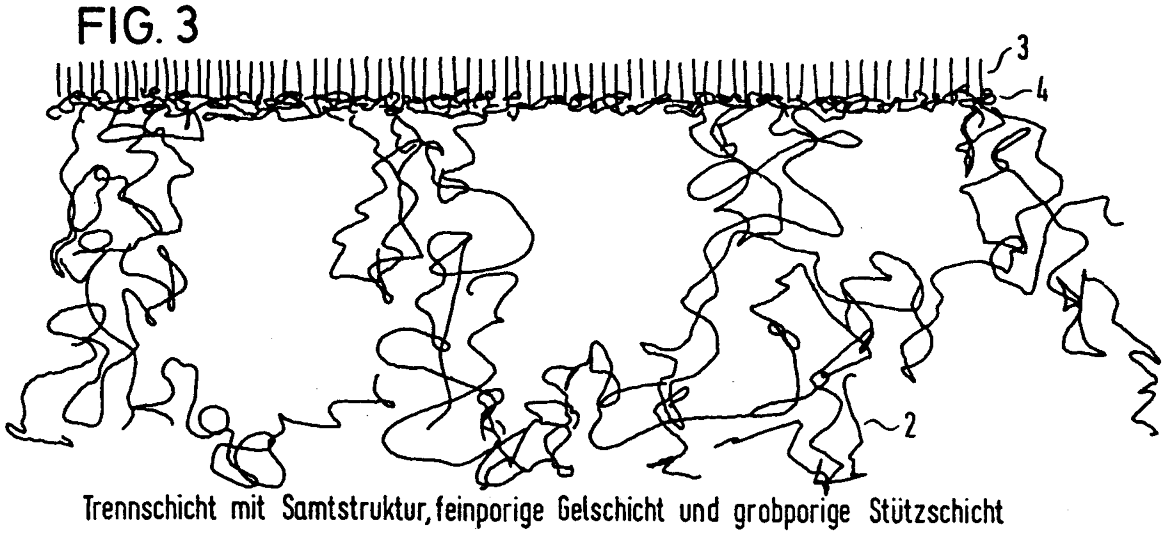


Trennschicht mit Samtstruktur, feinporige Gelschicht und grobporige Stützschicht

FIG. 4

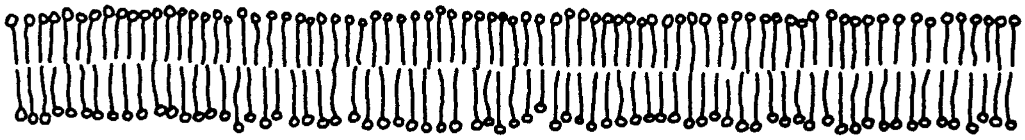

FIG. 5

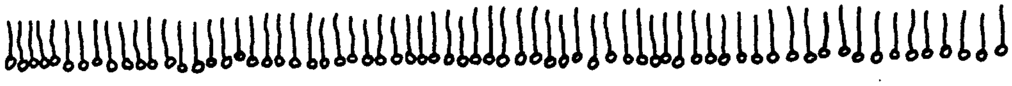

FIG. 6

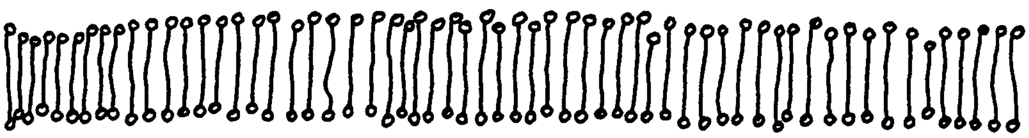

FIG. 7

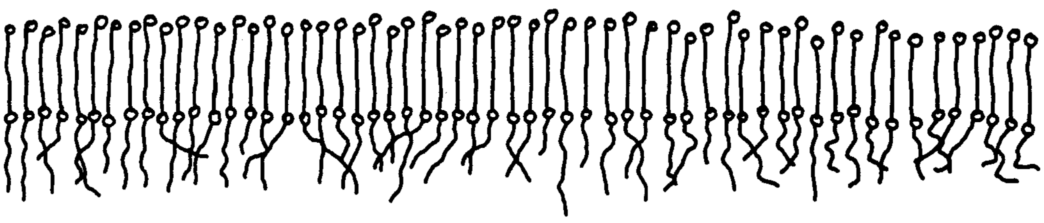

FIG. 8

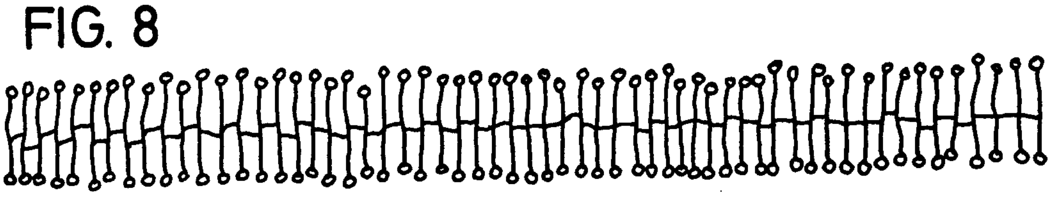

FIG. 9

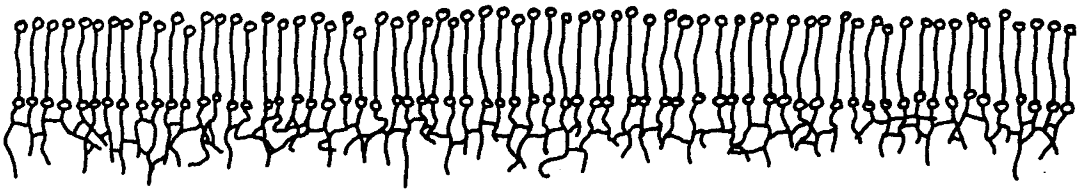

FIG. 10

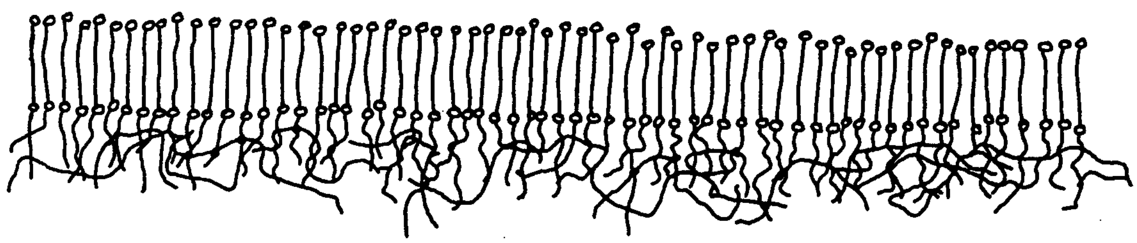

FIG. 11